(19) Europäisches Patentamt / European Patent Office / Office européen des brevets

(11) **EP 4 404 668 A1**

(12) **EUROPEAN PATENT APPLICATION**
published in accordance with Art. 153(4) EPC

(43) Date of publication:
**24.07.2024 Bulletin 2024/30**

(21) Application number: **21956591.8**

(22) Date of filing: **26.11.2021**

(51) International Patent Classification (IPC):
**H04W 72/12** $^{(2023.01)}$

(52) Cooperative Patent Classification (CPC):
**H04W 72/0446; H04W 72/12; H04W 72/563**

(86) International application number:
**PCT/CN2021/133360**

(87) International publication number:
**WO 2023/035420 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.09.2021 CN 202111066434**

(71) Applicant: **Quectel Wireless Solutions Co., Ltd.
Shanghai 201601 (CN)**

(72) Inventors:
• **LIU, Zheng**
  **Shanghai 201601 (CN)**
• **YANG, Zhongzhi**
  **Shanghai 201601 (CN)**

(74) Representative: **Richards, John
Ladas & Parry LLP
Temple Chambers
3-7 Temple Avenue
London EC4Y 0DA (GB)**

(54) **METHOD AND APPARATUS IN NODE FOR WIRELESS COMMUNICATION**

(57) This application discloses a method and a device used in nodes for wireless communication. The node receives a first signal which is used to determine the target resource group. The target resource group occupies the target time domain symbol group. The first PUCCH is sent, the first bit sequence is used to generate the first PUCCH; the first bit sequence comprises a first bit subset and a second bit subset, the first bit subset comprises bits encoded by the first bit block, and the second bit subset comprises bits encoded by the second bit block; the number of target bits is equal to the number of bits in the first bit subset, and the number of bits carried by the target resource group on at least one time domain symbol comprised in the target time domain symbol group is used together with the number of target bits to determine the target interval; and the target interval is used to determine the distribution of the first bit subset in the first bit sequence. This application improves the high priority transmission performance.

100

| Receives the first signal | 101 |

↓

| Sends the first PUCCH in the target resource pool | 102 |

Figure 1

EP 4 404 668 A1

**Description**

This application was submitted to the Chinese Patent Office on September 13, 2021 for priority Chinese patent application. The application number of this application is 202111066434.8, and the invention name is "Method and device for wireless communication in nodes". All content is incorporated by reference in this application.

**Technical Field**

This application relates to a transmission method and a device in a wireless communication system, in particular to a transmission scheme and a device for information with different priority levels in wireless communication.

**Background Art**

The application scenarios for future wireless communication system are becoming increasingly diverse, with different scenarios having different performance requirements for the system. In order to meet the different performance requirements of various application scenarios, it was decided at the 72nd plenary session of 3GPP (3rdd Generation Partner Project) RAN (Radio Access Network) to conduct research on NR (New Radio) (or 5G). At the 75th plenary session of 3GPP RAN, the WI (Work Item) of NR (New Radio ) was approved, after which the standardization work on NR was started. At the 86th plenary session of 3GPP RAN, it was decided to start work on the SI (Study Item) and WI (Work Item) of NR Rel-17.

In the NR technology domain, eMBB (enhanced Mobile Broadband), URLLC (Ultra-reliable and Low Latency Communications), and mMTC ( massive Machine Type Communications) are the three main application scenarios.

**Content of Invention**

URLLC communication features transmission of data or control information with different priority levels. In NR Rel-16, when UCIs (Uplink Control Information) with different priority levels collide in the time domain, lower priority UCIs are discarded to ensure the transmission of higher priority UCIs. In NR Rel-17, it supports the reuse of UCIs with different priority levels onto the same PUCCH.

This application discloses a solution for the reuse problem of UCIs associated with different priority levels. It should be noted that this application only describes URLLC as a typical application scenario or example. This application is also applicable to other scenarios facing similar problems (such as scenarios where a plurality of services coexist, or other scenarios where information with different priorities is reused, or scenarios where services are reused with different QoS requirements, or for different application scenarios, such as Internet of Vehicles and eMBB multiplexing). In these scenarios, a similar technical effect can be achieved. In addition, adopting a unified solution for different scenarios (including but not limited to URLLC scenarios) can also help reduce hardware complexity and costs. Without any conflict, the embodiments and features in the first node of this application can be applied to the second node, and vice versa. Specifically, for the interpretation of terminologies, names, functions, and variables in this application (if not otherwise specified), please refer to the definitions in the TS36 series, TS38 series and TS37 series of standard 3GPP protocols.

This application discloses a method for the first node in a wireless communication system, comprising:

Receiving a first signal, the first signal is used to determine a target resource group, which occupies the target time domain symbol group in the time domain, and the target time domain symbol group comprises at least one time domain symbol;

Sending a first PUCCH in the target resource group. The first bit sequence is used to generate the first PUCCH, and the first bit sequence comprises a plurality of bits in sequential order;

, the first bit sequence comprises a first bit subset and a second bit subset. The first bit subset comprises at least one bit after encoding the first bit block, and the second bit subset comprises at least one bit after encoding the second bit block. The priority index value associated with the first bit block is equal to the firstpriority indexvalue. The priority index value associated with the second bit block is equal to the secondpriority indexvalue, and the firstpriority indexvalue and the secondpriority indexvalue are two unequal non-negative integers. The number of target bits is equal to the number of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

As an embodiment, the distribution of bits comprised in the first bit subset in the first bit sequence is determined based on the target interval, thereby supporting interleaved multiplexing between high priority bits and low priority bits, achieving greater frequency diversity gain and time domain diversity gain, and improving the transmission performance of the UCI.

As an embodiment, the target interval is determined by combining the number of bits carried by the target resource group on at least one time domain symbol comprised in the target time domain symbol group with the value of the number of target bits. Therefore, while considering the frequency grading gain, the delay of high priority bits is also taken into account, which improves the high priority transmission performance while minimizing the transmission delay as much as possible.

According to an aspect of this application, the above method is characterized in that the first time domain symbol is a time domain symbol comprised in the target time domain symbol group. The first numerical value is equal to the number of bits carried by the target resource group on the first time domain symbol, the second numerical value is equal to the number of bits carried by the target resource group on the time domain symbol before the first time domain symbol, and the target bit numerical value, the first numerical value, and the second numerical value are used together to determine the target interval.

According to an aspect of this application, the above method is characterized in that the target difference is equal to the difference between the target bit numerical value and the second numerical value, and the target interval is equal to the maximum integer not greater than the first ratio. The ratio of the first numerical value to the target difference is used to determine the first ratio.

As an embodiment, in the interleaved multiplexing of high priority bits and low priority bits, interleaved miultiplexing only occurs on the latest time-domain symbol mapping the high priority bits, while obtaining frequency diversity gain and reducing the transmission and decoding delay of the high priority bits.

According to an aspect of this application, the above method is characterized in that the target sum value is equal to the sum of the first numerical value and the second numerical value, and the target interval is equal to the maximum integer not greater than the second ratio. The ratio of the target sum value to the target bit numerical value is used to determine the second ratio.

As an embodiment, all high priority bits and low priority bits are interleaved and a plurality ofxed together to maximize frequency diversity gain and time domain diversity gain, enabling a combined design with different numbers of time domain symbols configured, thus simplifying the standardization.

According to one aspect of this application, the above method comprises:

Receiving the first information block;

, the first information block is used to indicate the first encoding rate and the second encoding rate, the number of bits comprised in the first bit block and the first encoding rate are both used to determine the value of the number of target bits, and at least one of the first encoding rate or the second encoding rate is used to determine the number of RBs comprised in the target resource group in the frequency domain.

As an embodiment, the number of RBs occupied is determined based on the encoding rates of high and low priority bits, which matches the allocated resources with the configured bit rate, thus improving resource utilization and transmission performance.

According to an aspect of this application, the above method is characterized in that the first modulation order is equal to the modulation order of the first PUCCH, the target resource group comprises a plurality of REs, and the second time domain symbol is a time domain symbol comprised in the target time domain symbol group. The first modulation order and the number of REs comprised in the target resource group on the second time domain symbol are used together to determine the number of bits carried by the target resource group on the second time domain symbol.

According to an aspect of this application, the above method is characterized in that the bits comprised in the first bit subset are in sequential order, the feature bit is a bit comprised in the first bit subset, the index value of the feature bit in the first bit sequence is equal to the first sequential index value, and the index value of the feature bit in the first bit subset is equal to the second sequential index value. The first sequential index value and the second sequential index value are positively correlated, and the target interval and the second sequential index value are used together to determine the first sequential index value.

As an embodiment, while supporting interleaved multiplexing of high and low priority bits, the existing resource mapping order is still maintained, reducing the impact on standards while supporting early decoding of high-level bits.

This application discloses a method for a second node in wireless communication, comprising:

Sending a first signal, the first signal is used to indicate a target resource group, which occupies the target time domain symbol group in the time domain, and the target time domain symbol group comprises at least one time domain symbol;

Receiving a first PUCCH in the target resource group. The first bit sequence is used to generate the first PUCCH, and the first bit sequence comprises a plurality of bits in sequential order;,

the first bit sequence comprises a first bit subset and a second bit subset. The first bit subset comprises at least one bit after encoding the first bit block, and the second bit subset comprises at least one bit after encoding the second bit block. The priority index value associated with the first bit block is equal to the firstpriority indexvalue. The priority index value associated with the second bit block is equal to the secondpriority indexvalue, and the firstpriority indexvalue and the secondpriority indexvalue are two unequal non-negative integers. The number of target bits is equal to the number of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

According to an aspect of this application, the above method is characterized in that the first time domain symbol is a time domain symbol comprised in the target time domain symbol group. The first numerical value is equal to the number of bits carried by the target resource group on the first time domain symbol, the second numerical value is equal to the number of bits carried by the target resource group on the time domain symbol before the first time domain symbol, and the target bit numerical value, the first numerical value, and the second numerical value are used together to determine the target interval.

According to an aspect of this application, the above method is characterized in that the target difference is equal to the difference between the target bit numerical value and the second numerical value, and the target interval is equal to the maximum integer not greater than the first ratio. The ratio of the first numerical value to the target difference is used to determine the first ratio.

According to an aspect of this application, the above method is characterized in that the target sum value is equal to the sum of the first numerical value and the second numerical value, and the target interval is equal to the maximum integer not greater than the second ratio. The ratio of the target sum value to the target bit numerical value is used to determine the second ratio.

According to one aspect of this application, the above method comprises:

Sending a first information block;,

the first information block is used to indicate the first encoding rate and the second encoding rate, the number of bits comprised in the first bit block and the first encoding rate are both used to determine the value of the number of target bits, and at least one of the first encoding rate or the second encoding rate is used to determine the number of RBs comprised in the target resource group in the frequency domain.

According to an aspect of this application, the above method is characterized in that the first modulation order is equal to the modulation order of the first PUCCH, the target resource group comprises a plurality of REs, and the second time domain symbol is a time domain symbol comprised in the target time domain symbol group. The first modulation order and the number of REs comprised in the target resource group on the second time domain symbol are used together to determine the number of bits carried by the target resource group on the second time domain symbol.

According to an aspect of this application, the above method is characterized in that the bits comprised in the first bit subset are in sequential order, the feature bit is a bit comprised in the first bit subset, the index value of the feature bit in the first bit sequence is equal to the first sequential index value, and the index value of the feature bit in the first bit subset is equal to the second sequential index value. The first sequential index value and the second sequential index value are positively correlated, and the target interval and the second sequential index value are used together to determine the first sequential index value.

The application discloses a device used in a first node of wireless communication, which is characterized by comprising

A first receiver, which receives a first signal, the first signal is used to determine a target resource group, which occupies the target time domain symbol group in the time domain, and the target time domain symbol group comprises at least one time domain symbol;

A first transmitter, which sends a first PUCCH in the target resource group. The first bit sequence is used to generate the first PUCCH, and the first bit sequence comprises a plurality of bits in sequential order;,

the first bit sequence comprises a first bit subset and a second bit subset. The first bit subset comprises at least one bit after encoding the first bit block, and the second bit subset comprises at least one bit after encoding the second bit block. The priority index value associated with the first bit block is equal to the firstpriority indexvalue. The priority index value associated with the second bit block is equal to the secondpriority indexvalue, and the firstpriority indexvalue and the secondpriority indexvalue are two unequal non-negative integers. The number of target bits is equal to the number of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

This application discloses a device used in a second node of wireless communication, comprising:

A second transmitter, which sends a first signal, the first signal is used to indicate a target resource group, which occupies the target time domain symbol group in the time domain, and the target time domain symbol group comprises at least one time domain symbol;

A second receiver, which receives a first PUCCH in the target resource group. The first bit sequence is used to generate the first PUCCH, and the first bit sequence comprises a plurality of bits in sequential order;,

the first bit sequence comprises a first bit subset and a second bit subset. The first bit subset comprises at least one bit after encoding the first bit block, and the second bit subset comprises at least one bit after encoding the second bit block. The priority index value associated with the first bit block is equal to the firstpriority indexvalue. The priority index value associated with the second bit block is equal to the secondpriority indexvalue, and the firstpriority indexvalue and the secondpriority indexvalue are two unequal non-negative integers. The number of target bits is equal to the number of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

As an embodiment, the method described in this application has the following advantages:

- .The method in this application supports the interleaved multiplexing between high priority bits and low priority bits, achieving greater frequency diversity gain and time domain diversity gain, and improving the transmission performance of the UCI.

- The method of this application not only considers frequency grading gain but also considers the delay of high priority bits, in order to improve the high priority transmission performance while minimizing transmission delay as much as possible;

- After the method of this application has been adopted, in the interleaved multiplexing of high priority bits and low priority bits, interleaved miultiplexing only occurs on the latest time-domain symbol mapping the high priority bits, while achieving frequency diversity gain and reducing the transmission and decoding delay of the high priority bits.

The method of this application reuses all high priority bits and low priority bits together in an interleaved way to maximize frequency diversity gain and time domain diversity gain, enabling a combined design with different numbers of time domain symbols configured, thus simplifying the standardization process.
The method of this application determines the number of RBs occupied based on the encoding rates of high and low priority bits, which matches the allocated resources with the configured bit rate, improving resource utilization and transmission performance.
The method described in this application supports interleaved multiplexing of high and low priority bits, and still maintains the existing resource mapping order, reducing the impact on standards while supporting early decoding of high-level bits.

**Figures**

Other features, objectives and advantages of the application will become more apparent by reading the detailed description of non-limiting embodiments with reference to the following drawings:

Figure 1 shows a process flow diagram for the first signal and the first PUCCH according to an embodiment of this application;

Figure 2 shows a schematic diagram of a network architecture according to an embodiment of the application;

Figure 3 shows a schematic diagram of a wireless protocol architecture of a user plane and a control plane according to an embodiment of the application;

Figure 4 shows a schematic diagram of a first node and a second node according to an embodiment of this application;

Figure 5 shows a flow diagram for wireless signal transmission according to an embodiment of this application;

Figure 6 shows a schematic diagram of the relationship between the first numerical value and the second numerical value according to an embodiment of this application;

Figure 7 shows a schematic diagram for the relationship between the first target interval and the second target interval according to an embodiment of this application;

Figure 8 shows a schematic diagram of the relationship between the target interval and the target sum according to an embodiment of this application;

Figure 9 shows a schematic diagram of the target resource group according to an embodiment of this application;

Figure 10 shows a schematic diagram of the second time domain symbol according to an embodiment of this application;

Figure 11 shows a schematic diagram of the relationship between the first sequential index value and the second sequential index value according to an embodiment of this application;

Figure 12 shows a structural block diagram of a processing device in a first node according to an embodiment of this application;

Figure 13 shows a structural block diagram of a processing device in a second node according to an embodiment of this application.

## Detailed Description of the Preferred Embodiments

The technical solution of the application will be further described in detail below, in conjunction with the accompanying drawings. It is important to state that, without any conflict, the embodiments of the application and the features in the embodiments can be arbitrarily combined with each other.

Embodiment 1

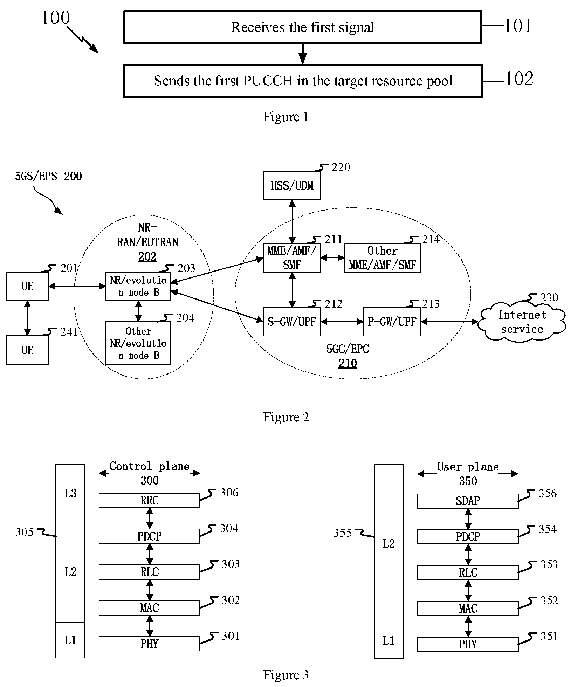

Embodiment 1 shows a flow diagram 100 of the first signal and the first PUCCH of an embodiment according to this application, as shown in Figure 1. In Figure 1, each box represents a step, and it should be emphasized that the order of these boxes in the figure does not represent the chronological relationship between the steps represented.
In Embodiment 1, the first node in this application receives a first signal in step 101, which is used to determine the target resource group. The target resource group occupies the target time domain symbol group in the time domain, and the target time domain symbol group comprises at least one time domain symbol. The first node in this application sends a first PUCCH in the target resource group in step 102, and the first bit sequence is used to generate the first PUCCH, which comprises a plurality of bits in sequential order. , the first bit sequence comprises a first bit subset and a second bit subset, the first bit subset comprises at least one bit after encoding the first bit block, and the second bit subset comprises at least one bit after encoding the second bit block. The priority index value associated with the first bit block is equal to the firstpriority indexvalue, the priority index value associated with the second bit block is equal to the secondpriority indexvalue, and the firstpriority indexvalue and the secondpriority indexvalue are two unequal non-negative integers. The number of target bits is equal to the number of bits comprised in the first bit subset, and the number of bits carried by the target resource group on at least one time domain symbol comprised in the target time domain symbol group is used together with the number of target bits to determine the target interval which is a positive integer. The target interval is used to determine the distribution of bits comprised in the first bit subset in the first bit sequence.

As an embodiment, the first signal is transmitted through an air interface or a wireless interface.

As an embodiment, the first signal comprises all or part of a high-level signal or a physical layer signal.

As an embodiment, the first signal comprises all or part of an RRC (Radio Resource Control) layer signal or MAC (Medium Access Control) layer signal.

As an embodiment, the first signal is cell specific or UE specific. 作为一个实施例，所述第一信令是每 BWP (Bandwidth Part, 带宽部分) 配置的 (Per BWP Configured)。

As an embodiment, the first signal is configured per BWP (Bandwidth Part). 作为一个实施例，所述第一信令包括一个 DCI (Downlink Control Information)信令的全部或部 分域。

As an embodiment, the first signal comprises all or part of the domain of a DCI (Downlink Control Information) signal. 作为一个实施例，所述第一信令包括一个 DCI 格式中的 PRI。

As an embodiment, the first signal comprises a PRI in DCI format. 作为一个实施例，所述第一信令通过 PDCCH 携带。

As an embodiment, the first signal is carried through PDCCH. 作为一个实施例，所述第一信令是通过关联到所述第一 PUCCH 的最晚的 PDCCH 携带的。

As an embodiment, the first signal is carried by the latest PDCCH associated with the first PUCCH. 作为一个实施例，所述第一信令是通过关联到所述第一 PUCCH的最晚的指示高优先等级索引的 PDCCH 携带的。

As an embodiment, the first signal is carried by the latest indicated high priority index PDCCH associated with the first PUCCH.

As an embodiment, the expression "the first signal is used to determine the target resource group" in the claim comprises the following meaning: the first signal is used by the first node in this application to determine the target resource group.

As an embodiment, the expression "the first signal is used to determine the target resource group" in the claim comprises the following meanings: the first signal is used to explicitly or implicitly indicate the target resource group.

As an embodiment, the expression "the first signal is used to determine the target resource group" in the claim comprises the following meanings: : the first signal is used to explicitly or implicitly indicate the index or identification of the target resource group.

The expression "the first signal is used to determine the target resource group" in the claim comprises the following meanings: : the target resource group is a PUCCH (Physical Uplink Control Channel) resource, and the first signal is used to explicitly or implicitly indicate the target resource group from the PUCCH resource set to which the target resource group belongs.

The expression "the first signal is used to determine the target resource group" in the claim comprises the following meanings: : the target resource group belongs to the first PUCCH resource, and the first signal is used to explicitly or implicitly indicate the first PUCCH resource from the PUCCH resource set to which the first PUCCH resource belongs. 作为一个实施例，所述目标资源组是一个 PUCCH 资源。

As an embodiment, the target resource group is a PUCCH resource. 作为一个实施例，所述目标资源组属于一个 PUCCH 资源。

As an embodiment, the target resource group belongs to a PUCCH resource. 作为一个实施例，所述目标资源组属于一个 PUCCH 资源，所述目标资源组在频域所包括的 RB (Resource Block, 资源块) 的数量不大于所属的 PUCCH 资源在频域所包括的 RB 的数量。

As an embodiment, the target resource group belongs to a PUCCH resource, and the number of RBs (Resource Blocks) comprised in the frequency domain of the target resource group is not greater than the number of RBs comprised in the frequency domain of the PUCCH resource to which it belongs. 作为一个实施例，所述目标资源组包括多个 RE (Resource Element, 资源元素)。

As an embodiment, the target resource group comprises a plurality of REs (Resource Elements).

As an embodiment, the target time domain symbol group only comprises one time domain symbol.

As an embodiment, the target time domain symbol group only comprises 2 time domain symbols.

As an embodiment, the target time domain symbol group comprises more than 2 time domain symbols.

As an embodiment, the target time domain symbol group comprises one or two time domain symbols.

As an embodiment, any time domain symbol comprised in the target time domain symbol group is an OFDM symbol.

As an embodiment, any time domain symbol comprised in the target time domain symbol group is an OFDM symbol corresponding to a subcarrier spacing (SCS).

As an embodiment, any time domain symbol comprised in the target time domain symbol group comprises a cyclic prefix and a data portion.

As an embodiment, the first PUCCH occupies all REs in the target resource group.

As an embodiment, the first PUCCH occupies a portion of REs in the target resource group.

As an embodiment, the first PUCCH occupies REs outside of the reference signal in the target resource group.

As an embodiment, the first PUCCH comprises a PUCCH radio frequency signal or a PUCCH baseband signal.

As an embodiment, the first PUCCH carries UCI (Uplink Control Information).

As an embodiment, a UCI payload using a UCI format is used to generate the first PUCCH.

As an embodiment, the UCI payload using a UCI format 2 is used to generate the first PUCCH.

As an embodiment, the first PUCCH adopts the PUCCH format 2.

As an embodiment, the first PUCCH adopts the PUCCH format 3 or 4.

As an embodiment, the first PUCCH does not comprise any reference signal.

As an embodiment, the first PUCCH comprises a PUCCH and a corresponding reference signal.

As an embodiment, the first bit sequence only comprises bits from the first bit subset and bits from the second bit subset.

As an embodiment, the first bit sequence comprises bits outside of the first bit subset and the second bit subset.

As an embodiment, any bit comprised in the first bit sequence is a coded bit.

As an embodiment, the first bit sequence is an output bit sequence consisting of different control multiplexing.

As an embodiment, the first bit sequence is a Scrambling input bit.

As an embodiment, the expression "the first bit sequence is used to generate the first PUCCH" in the claim comprises the following meaning: the first bit sequence is used by the first node in this application to generate the first PUCCH.

As an embodiment, the expression "the first bit sequence is used to generate the first PUCCH" in the claim comprises the following meanings: the first PUCCH carries the first bit sequence.

As an embodiment, the expression "the first bit sequence is used to generate the first PUCCH" in the claim comprises the following meaning: the first bit sequence is used to determine the first PUCCH.

As an embodiment, the expression "the first bit sequence is used to generate the first PUCCH" in the claim comprises the following meanings: after sequentially undergoing at least one of the processes of scrambling, modulation, layer mapping, transform precoding, precoding, mapping to virtual resource blocks, mapping from virtual to physical resource blocks, OFDM baseband signal generation, and modulation and upconversion, the first bit sequence generates the first PUCCH.

As an embodiment, the expression "the first bit sequence is used to generate the first PUCCH" in the claim comprises the following meaning: the first bit sequence is an encoded bit sequence used for control multiplexing of the first PUCCH.

As an embodiment, the expression "the first bit sequence is used to generate the first PUCCH" in the claim comprises the following meaning: the first bit sequence is the encoded bit sequence carried by the first PUCCH for controlling multiplexing.

As an embodiment, the bits comprised in the first bit sequence are in sequential order starting from "0".

As an embodiment, the bits comprised in the first bit sequence are in sequential order in the order 0,1,2....

As an embodiment, the index value of any one bit comprised in the first bit sequence is a non-negative integer.

As an embodiment, the index value of any one bit comprised in the first bit sequence is a positive integer.

As an embodiment, any bit comprised in the first bit subset is an encoded bit.

As an embodiment, any bit comprised in the first bit subset belongs to the first bit sequence.

As an embodiment, any bit comprised in the second bit subset is an encoded bit.

As an embodiment, any bit comprised in the second bit subset belongs to the first bit sequence.

As an embodiment, the first bit subset only comprises bits encoded by the first bit block.

As an embodiment, the first bit subset further comprises bits other than those encoded in the first bit block.

As an embodiment, the second bit subset only comprises the encoded bits of the second bit block.

As an embodiment, the second bit subset further comprises bits other than those encoded in the second bit block.

As an embodiment, the encoding comprises at least one of channel encoding or rate matching.

As an embodiment, the encoding comprises at least one of CRC attachment, channel encoding, or rate matching.

As an embodiment, the first bit block comprises at least one bit.

As an embodiment, the first bit block comprises information bits and CRC bits.

As an embodiment, the first bit block comprises UCI payload bits.

As an embodiment, the first bit block comprises UCI payload bits and CRC bits.

As an embodiment, any bit comprised in the first bit block is a HARQ-ACK bit.

As an embodiment, any bit comprised in the first bit block is a HARQ-ACK bit or a CRC bit.

As an embodiment, the first bit block comprises HARQ-ACK bits and CRC bits.

As an embodiment, the first bit block is a HARQ-ACK codebook.

As an embodiment, the first bit block comprises a HARQ-ACK codebook and CRC bits.

As an embodiment, the second bit block comprises at least one bit.

As an embodiment, the second bit block comprises information bits and CRC bits.

As an embodiment, the second bit block comprises UCI payload bits.

As an embodiment, the second bit block comprises UCI payload bits and CRC bits.

As an embodiment, any bit comprised in the second bit block is a HARQ-ACK bit.

As an embodiment, any bit comprised in the second bit block is a HARQ-ACK bit or a CRC bit.

As an embodiment, the second bit block comprises HARQ-ACK bits and CRC bits.

As an embodiment, the second bit block is a HARQ-ACK codebook.

As an embodiment, the second bit block comprises a HARQ-ACK codebook and CRC bits.

As an embodiment, the firstpriority indexvalue is equal to one of 0 or 1.

As an embodiment, the secondpriority indexvalue is equal to one of 0 or 1.

As an embodiment, the firstpriority indexvalue is equal to 1, and the secondpriority indexvalue is equal to 0.

As an embodiment, the firstpriority indexvalue is greater than the secondpriority indexvalue.

As an embodiment, the firstpriority indexvalue is smaller than the secondpriority indexvalue.

As an embodiment, the priority index value associated with the first bit block is the priority index value of the PDSCH (Physical Downlink Shared Channel) corresponding to at least one bit comprised in the first bit block.

As an embodiment, the priority index value associated with the first bit block is the value of the priority indicator carried by the DCI format associated with at least one bit comprised in the first bit block.

As an embodiment, at least one bit comprised in the first bit block is used to determine whether the target PDSCH has been correctly decoded, and the priority index value associated with the first bit block is the priority index value of the target PDSCH.

As an embodiment, at least one bit comprised in the first bit block is used to determine whether the target PDSCH has been correctly decoded, and the priority index value associated with the first bit block is the value of the priority indicator carried by the DCI format scheduling the target PDSCH.

As an embodiment, the firstpriority indexvalue is configured through signal.

As an embodiment, the firstpriority indexvalue is a default or predefined prioritypriority indexvalue.

As an embodiment, the priority index value associated with the first bit block is the priority index value corresponding to the HARQ codebook to which at least one bit comprised in the first bit block belongs.

As an embodiment, the priority index value associated with the first bit block is the priority index value corresponding to the ID of the HARQ codebook to which at least one bit comprised in the first bit block belongs.

As an embodiment, the priority index value associated with the second bit block is the priority index value of the PDSCH (Physical Downlink Shared Channel) corresponding to at least one bit comprised in the second bit block.

As an embodiment, the priority index value associated with the second bit block is the value of the priority indicator carried by the DCI format associated with at least one bit comprised in the second bit block.

As an embodiment, at least one bit comprised in the second bit block is used to determine whether the feature PDSCH has been correctly decoded, and the priority index value associated with the second bit block is the priority index value of the feature PDSCH.

As an embodiment, at least one bit comprised in the second bit block is used to determine whether the feature PDSCH has been correctly decoded, and the priority index value associated with the second bit block is the value of the priority indicator carried by the DCI format scheduling the feature PDSCH.

As an embodiment, the secondpriority indexvalue is configured through signal.

As an embodiment, the secondpriority indexvalue is a default or predefined prioritypriority indexvalue.

As an embodiment, the priority index value associated with the second bit block is the priority index value corresponding to the HARQ codebook to which at least one bit comprised in the second bit block belongs.

As an embodiment, the priority index value associated with the second bit block is the priority index value corresponding to the ID of the HARQ codebook to which at least one bit comprised in the second bit block belongs.

As an embodiment, the value of the number of target bits is equal to 1 or 2.

As an embodiment, the target bit numerical value is greater than 2.

As an embodiment, the target bit numerical value is a positive integer.

As an embodiment, the value of the number of target bits is equal to the total number of all bits comprised in the first bit subset.

As an embodiment, the expression "the number of bits carried by the target resource group on at least one time domain symbol comprised in the target time domain symbol group" in the claim refers to the number of bits carried by the REs on at least one time domain symbol comprised in the target time domain symbol group.

As an embodiment, the expression "the number of bits carried by the target resource group on at least one time domain symbol comprised in the target time domain symbol group" in the claim refers to the number of bits of the target resource group carried by the REs comprised in at least one time domain symbol comprised in the target time domain symbol group. The number of bits carried by an RE is equal to the product of the number of layers and the modulation order.

As an embodiment, the expression "the number of bits carried by the target resource group on at least one time domain symbol comprised in the target time domain symbol group" in the claim refers to the number of bits carried by the REs on at least one time domain symbol comprised in the target time domain symbol group, and the number of bits carried by a RE is equal to the modulation order.

As an embodiment, the expression "the number of bits carried by the target resource group on at least one time domain symbol comprised in the target time domain symbol group" in the claim refers to the number of bits mapped by the REs on at least one time domain symbol comprised in the target time domain symbol group.

As an embodiment, the expression "the number of bits carried by the target resource group on at least one time domain symbol comprised in the target time domain symbol group" in the claim refers to the number of bits associated with the REs on at least one time domain symbol comprised in the target time domain symbol group.

As an embodiment, the expression "the number of bits carried by the target resource group on at least one time domain symbol comprised in the target time domain symbol group" in the claim refers to the number of bits carried by the REs on one time domain symbol comprised in the target time domain symbol group.

As an embodiment, the expression "the number of bits carried by the target resource group on at least one time domain symbol comprised in the target time domain symbol group" in the claim refers to the number of bits carried by the REs on all time domain symbols comprised in the target time domain symbol group.

As an embodiment, the expression "the number of bits carried by the target resource group on at least one time domain symbol comprised in the target time domain symbol group" in the claim refers to the number of bits of the target resource group mapped by all REs comprised in the target resource group.

As an embodiment, the expression "the number of bits carried by the target resource group on at least one time domain symbol comprised in the target time domain symbol group" in the claim refers to the product of the total number of REs comprised in the target resource group and the modulation order.

As an embodiment, the expression "the number of bits carried by the target resource group on at least one time domain symbol comprised in the target time domain symbol group" in the claim refers to the number of bits carried by the REs on part time domain symbol comprised in the target time domain symbol group.

As an embodiment, the expression "the number of bits carried by the target resource group on at least one time domain symbol comprised in the target time domain symbol group" in the claim refers to the the product of the total number of REs comprised in the target resource group on one time domain symbol comprised in the target time domain symbol group and the modulation order.

As an embodiment, the target interval can be equal to 1.

As an embodiment, the target interval is greater than 1.

As an embodiment, the HARQ-ACK bits of different priority levels are arranged in priority order and are equal to the target interval, which is equal to 1.

As an embodiment, the HARQ-ACK bits with different priority levels are interleaved and are equal to the target interval, which is greater than 1.

As an embodiment, the bits comprised in the first bit subset and the bits comprised in the second bit subset are arranged in order of priority index values, and are equal to the target interval, which is equal to 1.

As an embodiment, the bits comprised in the first bit subset and the bits comprised in the second bit subset are interleaved according to the priority index values, and are equal to the target interval, which is greater than 1.

As an embodiment, the expression "the number of bits carried by the target resource group on at least one time domain symbol comprised in the target time domain symbol group and the value of the target bit number are used together to determine the target interval" in the claim comprises the following meanings: the number of bits carried by the target resource group on at least one time domain symbol comprised in the target time domain symbol group and the value of the target bit number are used by the first node or the second node in this application to determine the target interval.

As an embodiment, the expression "the number of bits carried by the target resource group on at least one time domain symbol comprised in the target time domain symbol group and the value of the target bit number are used together to determine the target interval" in the claim comprises the following meanings: the number of bits carried by the target resource group on at least one time domain symbol comprised in the target time domain symbol group and the value of the target bit number are used together to determine whether HARQ-ACK bits of different priority levels are interleaved, and the interval or minimum unit of interleaving is used when using interleaved distribution.

As an embodiment, the expression "the number of bits carried by the target resource group on at least one time domain symbol comprised in the target time domain symbol group and the value of the target bit number are used together to determine the target interval" in the claim comprises the following meanings: the number of bits carried by the target resource group on at least one time domain symbol comprised in the target time domain symbol group and the value of the target bit number are used together to determine whether HARQ-ACK bits of different priority levels are interleaved, and the interval or minimum unit of interleaving is used when using interleaved distribution.

As an embodiment, the expression "the number of bits carried by the target resource group on at least one time domain symbol comprised in the target time domain symbol group and the value of the target bit amount are used together to determine the target interval" in the claim comprises the following meanings: : when the value of the target bit amount is less than the number of bits carried by the target resource group on one time domain symbol comprised in the target time domain symbol group, the number of bits carried by the target resource group on one time domain symbol comprised in the target time domain symbol group and the value of the target bit number are used together to determine the target interval. When the number of target bits is greater than or equal to the number of bits carried by the target resource group on one of the time domain symbols comprised in the target time domain symbol group, the target interval is equal to 1.

As an embodiment, the expression "the number of bits carried by the target resource group on at least one time domain symbol comprised in the target time domain symbol group and the value of the target bit number are used together to determine the target interval" in the claim comprises the following meanings: the size relationship between the value of the target amount and the number of bits carried by the target resource group on one of the time domain symbols comprised in the target time domain symbol group is used to determine whether the bits comprised in the first bit subset and the bits comprised in the second bit subset are interleaved or arranged in the first bit sequence.

As an embodiment, the expression "the number of bits carried by the target resource group on at least one time domain symbol comprised in the target time domain symbol group and the value of the target bit number are used together to determine the target interval" in the claim comprises the following meanings: the size relationship between the RBs comprised in the frequency domain and the first threshold of the target resource group is used to determine whether the bits comprised in the first bit subset and the bits comprised in the second bit subset are interleaved or arranged in the first bit sequence. When the bits comprised in the first bit subset and the bits comprised in the second bit subset are interleaved or arranged in the first bit sequence, the number of bits carried by the target resource group on at least one time domain symbol comprised in the target time domain symbol group and the value of the number of target bits are used together to determine the spacing of the interleaved distribution or arrangement. As a subsidiary embodiment of the above embodiment, the first threshold is a predefined or signal configured positive integer greater than 1.

As an embodiment, the expression "the number of bits carried by the target resource group on at least one time domain symbol comprised in the target time domain symbol group and the value of the number of target bits are used together to determine the target interval" in the claim comprises the following meaning: when the number of RBs comprised in the target resource group in the frequency domain is greater than or equal to the first threshold, the number of bits carried by the target resource group on at least one time domain symbol comprised in the target time domain symbol group and the value of the target bit number are used together to determine the target interval. When the number of RBs comprised in the target resource group in the frequency domain is less than the first threshold, the target interval is equal to 1. As a subsidiary embodiment of the above embodiment, the first threshold is a predefined or signal configured positive integer greater than 1.

As an embodiment, the expression "the number of bits carried by the target resource group on at least one time domain symbol comprised in the target time domain symbol group and the value of the number of target bits are used together to determine the target interval" in the claim comprises the following meanings: when the number of RBs comprised in the target resource group in the frequency domain is greater than the first threshold, the number of bits carried by the target resource group on at least one time domain symbol comprised in the target time domain symbol group and the value of the target bit number are used together to determine the target interval. When the number of RBs comprised in the target resource group in the frequency domain is less than or equal to the first threshold, the target interval is equal to 1. As a subsidiary embodiment of the above embodiment, the first threshold is a predefined or signal configured positive integer.

As an embodiment, the expression "the number of bits carried by the target resource group on at least one time domain symbol comprised in the target time domain symbol group and the value of the target bit number are used together to determine the target interval" in the claim comprises the following meanings: the number of bits carried by the target resource group on at least one time domain symbol comprised in the target time domain symbol group and the value of the target bit number are used together to explicitly or implicitly determine the target interval.

As an embodiment, the expression "the number of bits carried by the target resource group on at least one time domain symbol comprised in the target time domain symbol group and the value of the target bit number are used together to determine the target interval" in the claim comprises the following meanings: the number of bits carried by the target resource group on at least one time domain symbol comprised in the target time domain symbol group and the value of the target bit number are used together to calculate the target interval directly or indirectly.

As an embodiment, the expression "the number of bits carried by the target resource group on at least one time domain symbol comprised in the target time domain symbol group and the value of the target bit number are used together to determine the target interval" in the claim comprises the following meanings: the number of bits carried by the target resource group on all time domain symbols comprised in the target time domain symbol group and the value of the target bit number are used together to determine the target interval.

As an embodiment, the expression "the number of bits carried by the target resource group on at least one time domain symbol comprised in the target time domain symbol group and the value of the target bit number are used together to determine the target interval" in the claim comprises the following meanings: the number of bits carried by the target resource group on part time domain symbols comprised in the target time domain symbol group and the value of the target bit number are used together to determine the target interval.

As an embodiment, the statement in the claim "the number of bits carried by the target resource group on at least one time domain symbol comprised in the target time domain symbol group and the value of the target bit number are used together to determine the target interval" is achieved through claim 2 in this application.

As an embodiment, the expression "the number of bits carried by the target resource group on at least one time domain symbol comprised in the target time domain symbol group and the value of the number of target bits are used together to determine the target interval" in the claim is achieved through claim 3 of this application.

As an embodiment, the expression "the number of bits carried by the target resource group on at least one time domain symbol comprised in the target time domain symbol group and the value of the target bit number are used together to determine the target interval" in the claim is achieved through claim 4 of this application.

As an embodiment, the expression "the number of bits carried by the target resource group on at least one time domain symbol comprised in the target time domain symbol group and the value of the target bit number are used together to determine the target interval" in the claim comprises the following meanings: the number of bits carried by the target resource group on at least one time domain symbol comprised in the target time domain symbol group and the value of the target bit number are used together to determine whether the target interval is greater than 1.

As an embodiment, the expression "the number of bits carried by the target resource group on at least one time domain symbol comprised in the target time domain symbol group and the value of the target bit number are used together to determine the target interval" in the claim is realized by satisfying the following equation with a target interval d:

$$d = \left\lfloor \bar{M}_{SC}^{UCI} / G^{ACK} \right\rfloor$$

, $\bar{M}_{SC}^{UCI}$ represents the number of bits carried by the target resource group on at least one time domain symbol comprised in the target time domain symbol group, and $G^{ACK}$ represents the value of the target bit number.

As an embodiment, the statement in the claim "the number of bits carried by the target resource group on at least one time domain symbol comprised in the target time domain symbol group and the value of the target bit number are used together to determine the target interval" is achieved by the target interval meeting the following formula:

$$d = \left\lfloor \bar{M}_{SC}^{UCI} / (G^{LP\_ACK} - m_{count}^{ACK}) \right\rfloor$$

Among them, $\bar{M}_{SC}^{UCI}$ represents the number of bits carried by the target resource group on at least one time domain symbol comprised in the target time domain symbol group, $G^{ACK}$ represents the value of the target bit number, and $m_{count}^{ACK}$ represents the number of bits carried by the target resource group on the earliest time domain symbol comprised in the target time domain symbol group.

As an embodiment, the expression "the number of bits carried by the target resource group on at least one time domain symbol comprised in the target time domain symbol group and the value of the target bit number are used together to determine the target interval" in the claim is realized by the target interval d satisfies the following formula:

$$d = \left\lfloor \bar{M}_{SC}^{UCI} / G^{ACK} \right\rfloor \cdot Q_m$$

$\overline{M}_{SC}^{UCI}$ represents the number of bits carried by the target resource group on at least one time domain symbol comprised in the target time domain symbol group, $G^{ACK}$ represents the value of the target bit number, and $Q_m$ represents the modulation order of the first PUCCH.

As an embodiment, the statement in the claim "the number of bits carried by the target resource group on at least one time domain symbol comprised in the target time domain symbol group and the value of the target bit number are used together to determine the target interval" is achieved by the target interval d meeting the following formula:

$$d = \left\lfloor \overline{M}_{SC}^{UCI} / (G^{LP\_ACK} - m_{count}^{ACK}) \right\rfloor \cdot Q_m$$

Among them, $\overline{M}_{SC}^{UCI}$ represents the number of bits carried by the target resource group on at least one time domain symbol comprised in the target time domain symbol group, $G^{ACK}$ represents the value of the target bit number, $m_{count}^{ACK}$ represents the number of bits carried by the target resource group on the earliest time domain symbol comprised in the target time domain symbol group, and $Q_m$ represents the modulation order of the first PUCCH.

As an embodiment, the modulation order of the first PUCCH is used to determine the target interval.

As an embodiment, the expression "the distribution of bits comprised in the first bit subset in the first bit sequence" in the claim comprises the distribution of the indexes of bits comprised in the first bit subset in the first bit sequence.

As an embodiment, the expression "the distribution of bits comprised in the first bit subset in the first bit sequence" in the claim comprises a pattern of the indexes of bits comprised in the first bit subset in the first bit sequence.

As an embodiment, the expression "the distribution of bits comprised in the first bit subset in the first bit sequence" in the claim comprises the difference between the indexes of two bits comprised in the first bit subset in the first bit sequence.

As an embodiment, the expression "the distribution of bits comprised in the first bit subset in the first bit sequence" in the claim comprises the maximum value of the difference between the indexes of any two bits comprised in the first bit subset in the first bit sequence.

As an embodiment, the expression "the distribution of bits comprised in the first bit subset in the first bit sequence" in the claim comprises the index of each bit comprised in the first bit subset in the first bit sequence.

As an embodiment, the expression "the distribution of bits comprised in the first bit subset in the first bit sequence" in the claim comprises the time-frequency distribution of the REs occupied or mapped by the first bit subset in the target resource group.

As an embodiment, the expression "the distribution of bits comprised in the first bit subset in the first bit sequence" in the claim comprises the distribution of REs occupied or mapped by the first bit subset in the frequency domain on the same time domain symbol.

As an embodiment, the expression "the distribution of bits comprised in the first bit subset in the first bit sequence" in the claim comprises the frequency domain interval of the REs occupied or mapped by the first bit subset on the same time domain symbol.

As an embodiment, the expression "the distribution of bits comprised in the first bit subset in the first bit sequence" in the claim comprises the number of subcarriers occupied or mapped by the first bit subset in the same time domain symbol and spaced in the frequency domain.

As an embodiment, the expression "the distribution of bits comprised in the first bit subset in the first bit sequence" in the claim comprises the maximum value of the number of subcarriers spaced in the frequency domain by the REs occupied or mapped by the first bit subset in the same time domain symbol.

As an embodiment, the expression "the target interval is used to determine the distribution of bits comprised in the first bit subset in the first bit sequence" in the claim comprises the following meanings: the target interval is used by the first node in this application to determine the distribution of bits comprised in the first bit subset in the first bit sequence.

As an embodiment, the expression "the target interval is used to determine the distribution of bits comprised in the first bit subset in the first bit sequence" in the claim comprises the following meaning: the difference in the indexes of two bits mapped or a plurality ofxed onto the same time domain symbol in the first bit sequence comprised in the first bit subset is equal to the target interval.

As an embodiment, the expression "the target interval is used to determine the distribution of bits comprised in the first bit subset in the first bit sequence" in the claim comprises the following meaning: the maximum value of the difference in the indexes of any two bits mapped or a plurality ofxed onto the same time domain symbol in the first bit sequence comprised in the first bit subset is equal to the target interval.

As an embodiment, the expression "the target interval is used to determine the distribution of bits comprised in the first bit subset in the first bit sequence" in the claim comprises the following meanings: the bits comprised in the first bit subset are in sequential order, and the difference between the indexes of two adjacent indexed bits in the first bit subset, which are mapped or a plurality ofxed onto the same time domain symbol in the first bit subset, in the first bit sequence is equal to the target interval.

As an embodiment, the expression "the target interval is used to determine the distribution of bits comprised in the first bit subset in the first bit sequence" in the claim comprises the following meaning: the target interval is used to calculate the difference in the indexes of two bits comprised in the first bit subset that are mapped or a plurality ofxed onto the same time domain symbol in the time domain in the first bit sequence.

As an embodiment, the expression "the target interval is used to determine the distribution of bits comprised in the first bit subset in the first bit sequence" in the claim comprises the following meanings: the target interval is used to determine the distribution of REs occupied by the first bit subset in the target resource group; and the distribution of REs occupied by the first bit subset in the target resource group is used to determine the distribution of bits comprised in the first bit subset in the first bit sequence.

As an embodiment, the expression "the target interval is used to determine the distribution of bits comprised in the first bit subset in the first bit sequence" in the claim comprises the following meanings: the target interval is used to determine the frequency domain distribution of REs occupied by the first bit subset on a time domain symbol; and the frequency domain distribution of the REs occupied by the first bit subset on a time domain symbol is used to determine the distribution of the bits comprised in the first bit subset in the first bit sequence.

As an embodiment, the expression "the target interval is used to determine the distribution of bits comprised in the first bit subset in the first bit sequence" in the claim comprises the following meaning: the target interval is equal to the number of subcarriers in the frequency domain spaced by REs occupied by the first bit subset on the same time domain symbol.

As an embodiment, the expression "the target interval is used to determine the distribution of bits comprised in the first bit subset in the first bit sequence" in the claim comprises the following meanings: the target interval is equal to the number of subcarriers in the frequency domain occupied or mapped by the REs of the first bit subset on the same time domain symbol, and the modulation symbols generated by the first bit sequence are sequentially mapped to the REs comprised in the target resource group in the order of frequency first then time domain.

## Embodiment 2

Embodiment 2 shows a schematic diagram of a network architecture according to this application, as shown in Figure 2. Figure 2 illustrates the network architecture 200 of 5G NR, LTE (Long Term Evolution), and LTE-A (Long Term Evolution Advanced) systems. 5G NR or LTE network architecture 200 can be referred to as 5GS (5G System)/EPS (Evolved Packet System) 200, or other suitable terminology. 5GS/EPS 200 can comprise one or more UE (User device) 201, NG-RAN (Next Generation Radio Access Network) 202, 5GC (5G Core Network)/EPC (Evolved Packet Core) 210, HSS (Home Subscriber Server)/UDM (Unified Data Management) 220, and Internet Services 230. 5GS/EPS can be interconnected with other access networks, but for simplicity, these entities/interfaces are not shown. As shown in the figure, 5GS/EPS provides packet switching services, but those skilled in the field will easily understand that the various concepts presented throughout this application can be extended to networks that provide circuit switching services or other cellular networks. NG-RAN comprises NR/Evolution Node B (gNB/eNB) 203 and other gNB (eNB) 204. GNB (eNB) 203 provides termination of user and control plane protocols towards UE201. GNB (eNB) 203 can be connected to other gNB (eNB) 204 through Xn/X2 interfaces (such as backhaul). GNB (eNB) 203 can also be referred to as a base station, base transceiver, radio base station, transceiver, transceiver function, basic service set (BSS), extended service set (ESS), TRP (sending receiving node), or other suitable terminology. GNB (eNB) 203 provides UE201 with an access point to 5GC/EPC210. Embodiments of UE201 comprise cellular phones, smartphones, Session Initiation Protocol (SIP) phones, laptops, Personal Digital Assistants (PDAs), satellite radios, non-ground base station communications, mobile satellite communications, global positioning systems, multimedia devices, video devices, digital audio players (such as MP3 players), cameras, game consoles, drones, aircraft, narrowband IoT devices, machine type communication devices, Land transportation vehicles, automobiles, wearable devices, testing devices, testing instruments, testing tools, or any other similar functional devices. Technical personnel in the field may also refer to UE201 as a mobile station, subscriber station, mobile unit, subscriber unit, wireless unit, remote unit, mobile device, wireless device, wireless communication device, remote device, mobile subscriber station, access terminal, mobile terminal, wireless terminal, remote terminal, handheld device, user agent, mobile client, client, or some other suitable term. GNB (eNB) 203 is connected to 5GC/EPC210 through S1/NG interface. 5GC/EPC210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Date Network Gateway)/UPF213. MME/AMF/SMF211 is the control node that handles signal between UE201 and 5GC/EPC210. In general, MME/AMF/SMF211 provides bearer and connection management. All user IP (Internet Protocol) packets are transmitted through S-GW/UPF212, which connects itself to P-GW/UPF213. P-GW provides UE IP address allocation and other functions. P-GW/UPF213 connects to Internet service 230. Internet service 230 comprises operator specific Internet protocol services, which can comprise the Internet, intranet, IMS (IP Multimedia Subsystem), and packet switching streaming services.

As an embodiment, the UE201 corresponds to the first node in this application.

As an embodiment, the UE201 supports multiplexing transmission of UCIs associated with different priority levels.

As an embodiment, the gNB (eNB) 201 corresponds to the second node in this application.

As an embodiment, the gNB (eNB) 201 supports multiplexing transmission of UCIs associated with different priority levels.

### Embodiment 3

Embodiment 3 shows a schematic diagram for an embodiment of a wireless protocol architecture in a user plane and a control plane according to an embodiment of the application, as shown in Figure 3. Figure 3 is a schematic diagram illustrating an embodiment of the radio protocol architecture for the user plane 350 and control plane 300. Figure 3 displays the radio protocol architecture for the control plane 300 for the first node (UE or gNB) and the second node (gNB or UE) in three layers: layer 1, layer 2 and layer 3. Layer 1 (L1 layer) is the lowest layer and implements various PHY (physical layer) signal processing functions. The L1 will be referred to as PHY301 in this document. Layer 2 (L2 layer) 305 is above PHY301 and is responsible for the link between the first node and the second node through PHY301. L2 layer 305 comprises MAC (Medium Access Control) sublayer 302, RLC (Radio Link Control Protocol) sublayer 303, and PDCP (Packet Data Convergence Protocol) sublayer 304, which terminate at the second node. The PDCP sublayer 304 provides multi-channel multiplexing between different radio bearers and logical channels. The PDCP sublayer 304 also provides security by encrypting data packets, as well as providing cross zone mobility support for the first node between the second nodes. RLC sublayer 303 provides segmentation and reassembly of upper layer data packets, retransmission of lost data packets, and reordering of data packets to compensate for disordered reception caused by HARQ. The MAC sublayer 302 provides multi-channel multiplexing between logic and transmission channels. The MAC sublayer 302 is also responsible for allocating various radio resources (such as resource blocks) in a cell between the first nodes. The MAC sublayer 302 is also responsible for HARQ operations. The RRC (Radio Resource Control) sublayer 306 in Layer 3 (L3) in control plane 300 is responsible for obtaining radio resources (i.e., radio bearers) and configuring the lower layer by means of RRC signal between the second node and the first node. The radio protocol architecture of user plane 350 comprises layer 1 (L1 layer) and layer 2 (L2 layer). The radio protocol architecture used for the first and second nodes in the user plane 350 is generally the same as the corresponding layers and sublayers in the control plane 300 for physical layer 351, PDCP sublayer 354 in L2 layer 355, RLC sublayer 353 in L2 layer 355, and MAC sublayer 352 in L2 layer 355, but the PDCP sublayer 354 also provides header compression for upper layer packets to reduce radio transmission overheads. The L2 355 in the user plane 350 also comprises the SDAP (Service Data Adaptation Protocol) sublayer 356, which is responsible for mapping between QoS flows and Data Radio Bearer (DRB) to support a range of services. Although not shown, the first node may have several upper layers above the L2 355, including a network layer (e.g., IP layer) terminating at the P-GW on the network side and an application layer terminating at the other end of the connection (e.g., remote UE, server, etc.).

As an embodiment, the wireless protocol architecture in Figure 3 is applicable to the first node in this application.

As an embodiment, the wireless protocol architecture in Figure 3 is applicable to the second node in this application.

As an embodiment, the first signal in this application is generated from RRC306, MAC302, MAC352, or PHY301, or PHY351.

As an embodiment, the first PUCCH in this application is generated from RRC306, MAC302, MAC352, PHY301, or PHY351.

### Embodiment 4

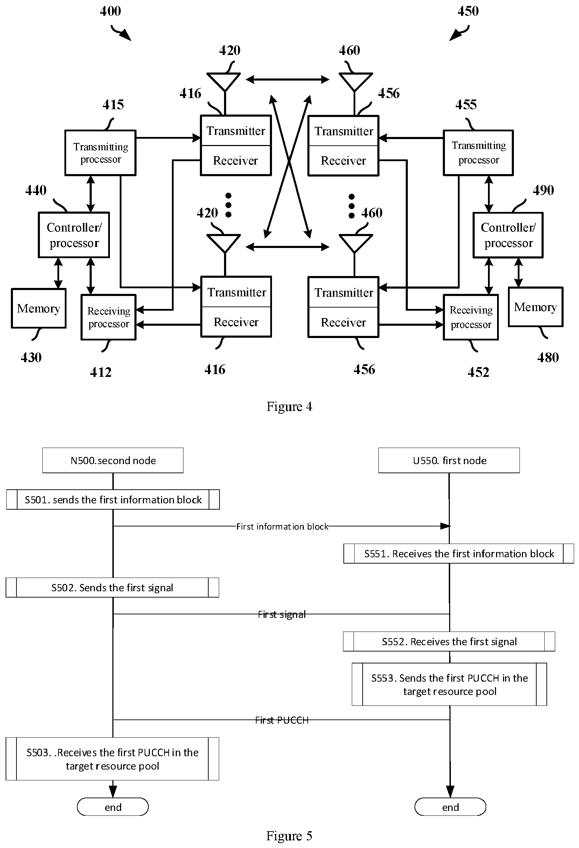

Embodiment 4 shows a schematic diagram of the first node and the second node according to an embodiment of this application, as shown in Figure 4.

The first node (450) can comprise a controller/processor 490, a data source/buffer 480, a receiving processor 452, a transmitter/receiver 456, and a transmitting processor 455. The transmitter/receiver 456 comprises an antenna 460.

The second node (410) can comprise a controller/processor 440, a data source/buffer 430, a receiving processor 412, a transmitter/receiver 416, and a transmitting processor 415. The transmitter/receiver 416 comprises an antenna 420.

In DL (Downlink), the upper layer package is provided to the controller/processor 440. The controller/processor 440 implements the functions of the L2 layer and above. In DL, the controller/processor 440 provides packet header compression, encryption, packet segmentation and reordering, multiplexing between logic and transport channels, and radio resource allocation to the first node 450 based on various priority metrics. The controller/processor 440 also carries out HARQ operations, retransmission of lost packets, and high-level signal to the first node 450, such as that the first information block is generated by the controller/processor 440 in this application. The transmission processor 415 implements various signal processing functions for the L1 layer (i.e., the physical layer), including encoding, interleaving, scrambling, modulation, power control/allocation, precoding, and physical layer control signal generation. For example, the generation of the physical layer signal carrying the first information block in this application and the first signal in this application is completed by the transmission processor 415. The generated modulation symbols are divided into parallel streams and mapped to corresponding multi-carrier subcarriers and/or multi-carrier symbols, which are then transmitted in the form of radio frequency signals by the transmission processor 415 via the transmitter 416 to the antenna 420. At the receiving end, each receiver 456 receives an RF signal through its corresponding antenna 460, while each receiver 456 restores the baseband information modulated onto the RF carrier and provides the baseband information to the receiving processor 452. The receiving processor 452 implements various signal reception and processing functions of the L1 layer. The signal reception and processing function comprises the reception of the physical layer signal carrying the first information block in this application and the first signal in this application, demodulation based on various modulation schemes (such as binary phase shift keying (BPSK), orthogonal phase shift keying (QPSK)) through the multi-carrier symbols in the multi-carrier symbol stream, followed by descrambling, decoding, and deinterleaving to recover data or control transmitted by the second node 410 on the physical channel. Subsequently, the data and control signals are provided to the controller/processor 490. The controller/processor 490 is responsible for the L2 layer and above, and interprets high-level information (such as the first information block in this application). The controller/processor may be associated with the memory 480 that stores program code and data. The memory 480 may be referred to as a computer readable medium.

In uplink (UL) transmission, similar to downlink transmission, high-level information is generated by the controller/processor 490 and implemented by the transmission processor 455 for various signal transmission processing functions in the L1 layer (i.e., physical layer). In this application, the physical layer signal of the first PUCCH is mapped to the antenna 460 by the transmission processor 455 through the transmitter 456, and transmitted in the form of an RF signal. The receiver 416 receives radio frequency signals through its corresponding antenna 420, while each receiver 416 restores the baseband information modulated onto the radio frequency carrier and provides the baseband information to the receiving processor 412. The receiving processor 412 implements various signal reception and processing functions for the L1 layer (i.e., the physical layer), including receiving and processing the physical layer signal carrying the first PUCCH in this application, and then providing data and/or control signals to the controller/processor 440. The function of implementing the L2 layer in controller/processor 440 comprises interpreting high-level information. The controller/processor may be associated with the buffer 430 that stores program code and data. The buffer 430 may be a computer readable medium.

As an embodiment, the first node 450 comprises at least one processor and at least one block of memory, the block of memory comprises computer program codes. The memory and the computer program codes are configured to be used with the processor, and the first node 450 at least receives a first signal, which is used to determine a target resource group that occupies the target time domain symbol group in the time domain, where the target time domain symbol group comprises at least one time domain symbol. A first PUCCH is sent in the target resource group, the first bit sequence is used to generate the first PUCCH, and the first bit sequence comprises a plurality of bits in sequential order. Among them, the first bit sequence comprises a first bit subset and a second bit subset, the first bit subset comprises at least one bit after encoding the first bit block, and the second bit subset comprises at least one bit after encoding the second bit block. The priority index value associated with the first bit block is equal to the firstpriority indexvalue, the priority index value associated with the second bit block is equal to the secondpriority indexvalue, and the firstpriority indexvalue and the secondpriority indexvalue are two unequal non-negative integers, respectively. The number of target bits is equal to the number of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

As an embodiment, the first node 450 comprises a memory for storing computer readable instruction programs, which generate actions when executed by at least one processor. The actions comprise receiving a first signal which is used to determine a target resource group. The target resource group occupies the target time domain symbol group in the time domain. The target time domain symbol group comprises at least one time domain symbol. A first PUCCH is sent in the target resource group, and a first bit sequence is used to generate the first PUCCH. The first bit sequence comprises a plurality of bits in sequential order. Among them, the first bit sequence comprises a first bit subset and a second bit subset. The first bit subset comprises at least one bit after encoding the first bit block, and the second bit subset comprises at least one bit after encoding the second bit block. The priority index value associated with the first bit block is equal to the firstpriority indexvalue, and the priority index value associated with the second bit block is equal to the secondpriority indexvalue. The firstpriority indexvalue and the secondpriority indexvalue are two non-negative integers that are not equal respectively. The number of target bits is equal to the amount of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

As an embodiment, the second node 410 device comprises at least one processor and at least one block of memory, which comprises computer program codes. The memory and the computer program codes are configured to be used with the processor. The second node 410 carries out at least the following actions: sending a first signal which is used to indicate the target resource group, the target resource group occupies the target time domain symbol group in the time domain, and the target time domain symbol group comprises at least one time domain symbol; and receiving a first PUCCH in the target resource group, the first bit sequence is used to generate the first PUCCH, and the first bit sequence comprises a plurality of bits in sequential order; among them, the first bit sequence comprises a first bit subset and a second bit subset, the first bit subset comprises at least one bit after encoding the first bit block, and the second bit subset comprises at least one bit after encoding the second bit block; the priority index value associated with the first bit block is equal to the firstpriority indexvalue, the priority index value associated with the second bit block is equal to the secondpriority indexvalue, and the firstpriority indexvalue and the secondpriority indexvalue are two unequal non-negative integers, respectively; the number of target bits is equal to the number of bits comprised in the first bit subset, and the number of bits carried by the target resource group on at least one time domain symbol comprised in the target time domain symbol group is used together with the number of target bits to determine the target interval which is a positive integer; and the target interval is used to determine the distribution of bits comprised in the first bit subset in the first bit sequence.

As an embodiment, the second node 410 comprises a memory for storing computer readable instruction programs that generate actions when executed by at least one processor. The actions comprise the following: sending a first signal which is used to indicate a target resource group that occupies the target time domain symbol group in the time domain; and the target time domain symbol group comprises at least one time domain symbol; and receiving a first PUCCH in the target resource group, the first bit sequence is used to generate the first PUCCH, and the first bit sequence comprises a plurality of bits in sequential order; among them, the first bit sequence comprises a first bit subset and a second bit subset, the first bit subset comprises at least one bit after encoding the first bit block, and the second bit subset comprises at least one bit after encoding the second bit block; the priority index value associated with the first bit block is equal to the firstpriority indexvalue, the priority index value associated with the second bit block is equal to the secondpriority indexvalue, and the firstpriority indexvalue and the secondpriority indexvalue are two unequal non-negative integers, respectively; the number of target bits is equal to the number of bits comprised in the first bit subset, and the number of bits carried by the target resource group on at least one time domain symbol comprised in the target time domain symbol group is used together with the number of target bits to determine the target interval which is a positive integer; and the target interval is used to determine the distribution of bits comprised in the first bit subset in the first bit sequence.

As an embodiment, the first node 450 is a user device (UE).

As an embodiment, the first node 450 is a user device that supports information multiplexing transmission associated with different priority levels.

As an embodiment, the second node 410 is a base station device (gNB/eNB).

As an embodiment, the second node 410 is a base station device that supports information multiplexing transmission associated with different priority levels.

As an embodiment, the receiver 456 (including antenna 460) and receiving processor 452 are used to receive the first signal in this application.

As an embodiment, the transmitter 456 (including antenna 460) and transmission processor 455 are used to transmit the first PUCCH in this application.

As an embodiment, the receiver 456 (including antenna 460), receiving processor 452, and controller/processor 490 are used to receive the first information block in this application.

As an embodiment, the transmitter 416 (including antenna 420) and transmission processor 415 are used to transmit the first signal in this application.

As an embodiment, the receiver 416 (including antenna 420) and receiving processor 412 are used to receive the first PUCCH in this application.

As an embodiment, the transmitter 416 (including antenna 420), transmission processor 415, and controller/processor 440 are used to transmit the first information block in this application.

**Embodiment 5**

Embodiment 5 shows a flowchart of wireless signal transmission based on one embodiment of this application, as shown in Figure 5. In Figure 5, the second node N500 is the maintenance base station of the service cell for the first node U550. It should be noted that the order in this embodiment does not limit the order of signal transmission and implementation in this application.

For **the second node N500,** the first information block is sent in step S501, the first signal is sent in step S502, and the first PUCCH is received in the target resource group in step S503.

For **the first node U550,** the first information block is received in step S551, the first signal is received in step S552, and the first PUCCH is sent in the target resource group in step S553.

In Embodiment 5, the first signal is used to determine a target resource group which occupies the target time domain symbol group in the time domain, and the target time domain symbol group comprises at least one time domain symbol; the first bit sequence is used to generate the first PUCCH, and comprises a plurality of bits in sequential order; among them, the first bit sequence comprises a first bit subset and a second bit subset, the first bit subset comprises at least one bit after encoding the first bit block, and the second bit subset comprises at least one bit after encoding the second bit block; the priority index value associated with the first bit block is equal to the firstpriority indexvalue, the priority index value associated with the second bit block is equal to the secondpriority indexvalue, and the firstpriority indexvalue and the secondpriority indexvalue are two unequal non-negative integers, respectively; the number of target bits is equal to the number of bits comprised in the first bit subset, and the number of bits carried by the target resource group on at least one time domain symbol comprised in the target time domain symbol group is used together with the number of target bits to determine the target interval, which is a positive integer; the target interval is used to determine the distribution of bits comprised in the first bit subset in the first bit sequence; the first information block is used to indicate the first encoding rate and the second encoding rate, the number of bits comprised in the first bit block and the first encoding rate are used together to determine the value of the number of target bits, and at least one of the first encoding rate or the second encoding rate is used to determine the number of RBs comprised in the target resource group in the frequency domain.

As an embodiment, the first information block is transmitted through an air interface or wireless interface.

As an embodiment, the first information block comprises all or part of a high-level signal or physical layer signal.

As an embodiment, the first information block comprises all or part of an RRC (Radio Resource Control) layer signal or MAC (Medium Access Control) layer signal.

As an embodiment, the first information block is carried through the PDSCH (Physical Downlink Shared Channel).

As an embodiment, the first information block is cell specific or UE specific.

As an embodiment, the first information block is configured per BWP (Bandwidth Part).

As an embodiment, the first information block comprises all or part of the fields in a DCI (Downlink Control Information) format.

As an embodiment, the first information block comprises more than one sub information block, and each sub information block comprised in the first information block is an IE (Information Element) or a Field in the RRC signal to which the first information block belongs. One or more sub information blocks comprised in the first information block are used to determine the first factor.

As an embodiment, the first information block comprises all or part of the fields in the IE (Information Element) "PUCCH Config".

As an embodiment, the first information block comprises all or part of the fields (Fields) in the IE (Information Element) "BWP UplinkDedicated".

As an embodiment, the first information block comprises all or part of the fields in the IE (Information Element) "PUCCH Configuration List".

As an embodiment, the first information block comprises all or part of the fields (Fields) in the first "PUCCH-Config" IE comprised in the IE (Information Element) "PUCCH Configuration List" .

As an embodiment, the first information block comprises all or part of the fields (Fields) in the second "PUCCH Config" IE comprised in the IE (Information Element) "PUCCH Configuration List" .

As an embodiment, the first information block comprises the "maxCodeRate" field and the "maxCodeRateLP-r17" field in the "PUCCH FormatConfig" field of the IE (Information Element) "PUCCH-Config".

As an embodiment, the expression "the first information block is used to indicate the first encoding rate and the second encoding rate" in the claim comprises the following meanings: the first information block is used by the second node in this application to indicate the first encoding rate and the second encoding rate.

As an embodiment, the expression "the first information block is used to indicate the first encoding rate and the second encoding rate" in the claim comprises the following meaning: the first information block is used to indicate the first encoding rate and the second encoding rate to the first node in this application.

As an embodiment, the expression "the first information block is used to indicate the first encoding rate and the second encoding rate" in the claim comprises the following meanings: the first information block is used to indicate the first encoding rate and the second encoding rate either explicitly or implicitly.

As an embodiment, the expression "the first information block is used to indicate the first encoding rate and the second encoding rate" in the claim comprises the following meanings: the two fields comprised in the first information block are used to indicate the first encoding rate and the second encoding rate, respectively.

As an embodiment, the expression "the first information block is used to indicate the first encoding rate and the second encoding rate" in the claim comprises the following meanings: the "maxCodeRate" field and the "maxCodeRateLP-r17" field comprised in the first information block are used to indicate the first encoding rate and the second encoding rate, respectively.

As an embodiment, the expression "the first information block is used to indicate the first encoding rate and the second encoding rate" in the claim comprises the following meanings: the first information block is used to indicate the first encoding rate and the second encoding rate from X1 predefined encoding rate values, which are positive integers greater than 1, either explicitly or implicitly.

As an embodiment, the expression "the first information block is used to indicate the first encoding rate and the second encoding rate" in the claim comprises the following meanings: the first information block is used to indicate the first encoding rate and the second encoding rate from X1 predefined encoding rate values and X2 predefined encoding rate values, respectively. X1 is a positive integer greater than 1, and X2 is a positive integer greater than 1.

**Embodiment 6**

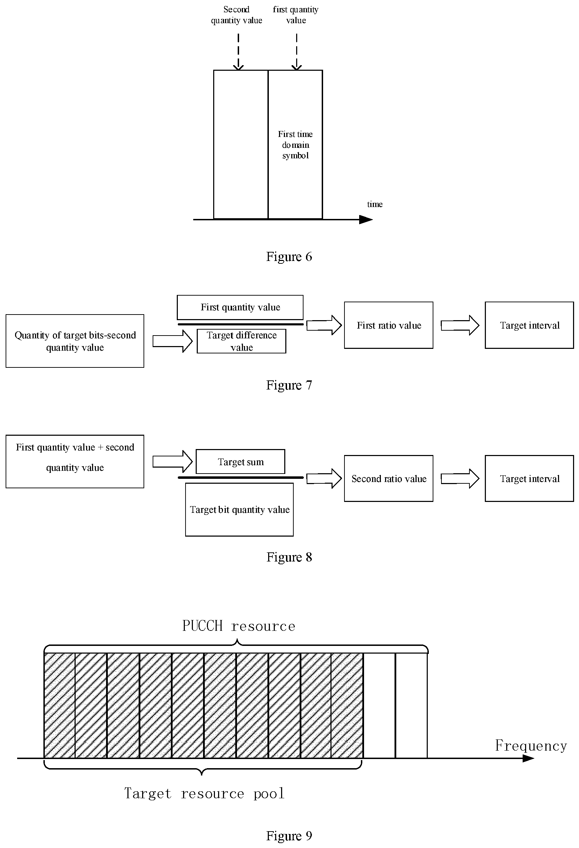

Embodiment 6 illustrates a schematic diagram of the relationship between the first amount value and the second amount value according to one embodiment of this application, as shown in Figure 6. In Figure 6, the horizontal axis represents time, and each rectangular box represents one time domain symbol comprised in the target time domain symbol group. The first and second amount values correspond to two time domain symbols.

In Embodiment 6, the first time domain symbol is a time domain symbol comprised in the target time domain symbol group in this application The first amount value is equal to the number of bits carried by the target resource group on the first time domain symbol in this application, and the second amount value is equal to the number of bits carried by the target resource group on the time domain symbol before the first time domain symbol. The target specific amount value, the first amount value, and the second amount value are used together to determine the target interval in this application.

As an embodiment, the first time domain symbol is the latest time domain symbol comprised in the target time domain symbol group.

As an embodiment, the first time domain symbol is the earliest time domain symbol comprised in the target time domain symbol group.

As an embodiment, when the target time domain symbol group comprises a plurality of time domain symbols, the first time domain symbol is any time domain symbol other than the earliest time domain symbol comprised in the target time domain symbol group.

As an embodiment, the first amount value is a positive integer.

As an embodiment, the first amount value is equal to the product of the total number of REs comprised in the target resource group on the first time domain symbol and the modulation order of the first PUCCH.

As an embodiment, the first amount value is equal to the product of the number of subcarriers occupied by the target resource group in the frequency domain on the first time domain symbol and the modulation order of the first PUCCH.

As an embodiment, the second amount value is a non-negative integer.

As an embodiment, the second amount value can be equal to 0.

As an embodiment, when the target time domain symbol group comprises a plurality of time domain symbols, the first amount value is equal to the second amount value.

As an embodiment, when the target time domain symbol group comprises a plurality of time domain symbols, the second amount value is not less than the first amount value.

As an embodiment, when the target time domain symbol group only comprises the first time domain symbol, the second amount value is equal to 0.

As an embodiment, when the first time domain symbol is the earliest time domain symbol comprised in the target time domain symbol group, the second amount value is equal to 0.

As an embodiment, the expression "the second amount value is equal to the number of bits carried by the target resource group on the time domain symbol before the first time domain symbol" in the claim comprises the following meaning: when the target time domain symbol group comprises other time domain symbols before the first time domain symbol, the second amount value is equal to the number of bits carried by the target resource group on the time domain symbol before the first time domain symbol. Otherwise, the second amount value is equal to 0.

As an embodiment, the expression "the second amount value is equal to the number of bits carried by the target resource group on the time domain symbol before the first time domain symbol" in the claim comprises the following meanings: when the target time domain symbol group comprises a plurality of time domain symbols, the second amount value is equal to the number of bits carried by the target resource group on the time domain symbol before the first time domain symbol. When the target time domain symbol group only comprises one time domain symbol, the second amount value is equal to 0.

As an embodiment, the second amount value is equal to the product of the number of REs comprised in the target resource group on the time domain symbol before the first time domain symbol and the modulation order of the first PUCCH.

As an embodiment, the second amount value is equal to the number of REs comprised in the target resource group on the time domain symbol before the first time domain symbol.

As an embodiment, the expression "the target bit amount value, the first amount value, and the second amount value are used together to determine the target interval" in the claim comprises the following meanings: the target bit amount value, the first amount value, and the second amount value are used together by the first node in this application to determine the target interval.

As an embodiment, the expression "the target bit amount value, the first amount value, and the second amount value are used together to determine the target interval" in the claim comprises the following meanings: the target bit amount value, the first amount value, and the second amount value are used together to directly or indirectly calculate the target interval.

As an embodiment, the expression "the target bit amount value, the first amount value, and the second amount value are used together to determine the target interval" in the claim is achieved through claim 3 of this application.

As an embodiment, the expression "the target bit amount value, the first amount value, and the second amount value are used together to determine the target interval" in the claim is achieved through claim 4 of this application.

As an embodiment, the expression "the target bit amount value, the first amount value, and the second amount value are used together to determine the target interval" in the claim comprises the following meanings: when the target bit amount value is greater than or equal to the first amount value, the target interval is equal to 1. When the target bit amount value is less than the first amount value, the target bit amount value and the second amount value are used together to directly or indirectly calculate the target interval.

As an embodiment, the expression "the target bit amount value, the first amount value, and the second amount value are used together to determine the target interval" in the claim comprises the following meanings: when the target bit amount value is greater than or equal to the first amount value, the target interval is equal to 1. When the target bit amount value is less than the first amount value, the ratio of the second amount value to the target bit amount value is used to determine the target interval.

As an embodiment, the expression "the target bit amount value, the first amount value, and the second amount value are used together to determine the target interval" in the claim comprises the following meanings: when the target bit amount value is greater than the second amount value, the ratio of the difference between the first amount value, the target bit amount value and the second amount value is used to determine the target interval. When the target bit amount value is less than or equal to the second amount value, the ratio of the second amount value to the target bit amount value is used to determine the target interval.

**Embodiment 7**

Embodiment 7 illustrates a schematic diagram of the relationship between the target interval and the target difference according to one embodiment of this application, as shown in Figure 7. In Figure 7, each rectangular box represents a parameter, variable, or result of an operation, and the arrow represents the process of the operation.

In Embodiment 7, the target difference is equal to the difference between the target bit amount value in this application and the second amount value in this application, and the target interval in this application is equal to the maximum integer not greater than the first ratio. The ratio of the first amount value to the target difference in this application is used to determine the first ratio.

As an embodiment, the target difference can be equal to 0.

As an embodiment, the target difference is a non-negative integer.

As an embodiment, the target difference can be less than 0.

As an embodiment, the target interval is equal to the downward rounding value of the first ratio.

As an embodiment, when the first ratio is an integer, the target interval is equal to the first ratio, and when the first ratio is not an integer, the target interval is equal to or less than the maximum integer less than the first ratio.

As an embodiment, the expression "the ratio of the first quantity value to the target difference is used to determine the first ratio" in the claim comprises the following meaning: the ratio of the first quantity value to the target difference is used by the first node or the second node in this application to determine the first ratio.

As an embodiment, the expression "the ratio of the first quantity value to the target difference is used to determine the first ratio" in the claim comprises the following meaning: the ratio of the first quantity value to the target difference is used to directly or indirectly calculate the first ratio.

As an embodiment, the expression "the ratio of the first quantity value to the target difference is used to determine the first ratio" in the claim comprises the following meaning: the first ratio is equal to the ratio of the first quantity value to the target difference.

As an embodiment, the expression "the ratio of the first quantity value to the target difference is used to determine the first ratio" in the claim comprises the following meaning: the first ratio is equal to the quotient between the first quantity value and the target difference.

As an embodiment, the expression "the ratio of the first quantity value to the target difference is used to determine the first ratio" in the claim comprises the following meaning: the first ratio is equal to the absolute value of the ratio of the first quantity value to the target difference.

As an embodiment, the expression "the ratio of the first quantity value to the target difference is used to determine the first ratio" in the claim comprises the following meanings: the first ratio and the ratio of the first quantity value to the target difference are linearly correlated, and the correlation coefficient is predefined or signal configured.

## Embodiment 8

Embodiment 8 illustrates a schematic diagram of the relationship between the target interval and the target sum according to one embodiment of this application, as shown in Figure 8. In Figure 8, each rectangular box represents a parameter, variable, or result of an operation, and the arrow represents the process of an operation.

In Embodiment 8, the target sum value is equal to the sum of the first quantity value and the second quantity value in this application, and the target interval in this application is equal to the maximum integer not greater than the second ratio. The ratio of the target sum value to the target bit quantity value in this application is used to determine the second ratio.

As an embodiment, the target sum value is a positive integer.

As an embodiment, the target interval is equal to the downward rounding value of the second ratio.

As an embodiment, when the second ratio is an integer, the target interval is equal to the second ratio. When the second ratio is a non-integer, the target interval is equal to the maximum integer smaller than the second ratio.

As an embodiment, the expression "the ratio of the target and value to the number of target bits is used to determine the second ratio" in the claim comprises the following meanings: the ratio of the target sum value to the number of target bits is used by the first node or the second node in this application to determine the second ratio.

As an embodiment, the expression "the ratio of the target sum value to the target bit quantity value is used to determine the second ratio" in the claim comprises the following meaning: the ratio of the target sum value to the target bit quantity value is used to directly or indirectly calculate the second ratio.

As an embodiment, the expression "the ratio of the target sum value to the target bit quantity value is used to determine the second ratio" in the claim comprises the following meaning: the second ratio is equal to the ratio value between the target sum value and the target bit quantity value.

As an embodiment, the expression "the ratio of the target sum value to the target bit quantity value is used to determine the second ratio" in the claim comprises the following meaning: the second ratio is equal to the absolute value of the ratio of the target sum value to the target bit quantity value.

As an embodiment, the expression "the ratio of the target value to the number of target bits is used to determine the second ratio" in the claim comprises the following meanings: the second ratio is linearly correlated with the ratio of the target sum value to the number of target bits, and the correlation coefficient is predefined or signal configured.

## Embodiment 9

Embodiment 9 illustrates a schematic diagram of a target resource group according to one embodiment of this application, as shown in Figure 9. In Figure 9, the horizontal axis represents the frequency, each rectangular box represents the RB comprised in a PUCCH resource, and each diagonally filled rectangle represents the RB comprised in the target resource group in the frequency domain.

In Embodiment 9, the first information block in this application is used to indicate the first encoding rate and the second encoding rate, and the number of bits comprised in the first bit block and the first encoding rate in this application are both used to determine the target bit quantity value. At least one of the first encoding rate or the second encoding rate is used to determine the number of RBs comprised in the frequency domain of the target resource group in this application.

As an embodiment, the first encoding rate is a non-negative number not greater than 1

As an embodiment, the first encoding rate can be greater than 1.

As an embodiment, the first encoding rate is a positive number less than 1.

As an embodiment, the first encoding rate is equal to one of 0.08, 0.15, 0.25, 0.35, 0.45, 0.6 and 0.8.

As an embodiment, the second encoding rate is a non-negative number not greater than 1.

As an embodiment, the second encoding rate can be greater than 1.

As an embodiment, the second encoding rate is a positive number less than 1.

As an embodiment, the second encoding rate is equal to one of 0.08, 0.15, 0.25, 0.35, 0.45, 0.6 and 0.8.

As an embodiment, the first encoding rate is not greater than the second encoding rate.

As an embodiment, the first encoding rate is smaller than the second encoding rate.

As an embodiment, the first encoding rate is equal to the second encoding rate.

As an embodiment, the expression "the number of bits comprised in the first bit block and the first encoding rate are both used to determine the target bit quantity value" in the claim comprises the following meaning: the number of bits comprised in the first bit block and the first encoding rate are both used by the first node or the second node to determine the target bit quantity value.

As an embodiment, the expression "the number of bits comprised in the first bit block and the first encoding rate are both used to determine the target bit quantity value" in the claim comprises the following meaning: the number of bits comprised in the first bit block and the first encoding rate are both used to calculate the target bit quantity value.

As an embodiment, the expression "the number of bits comprised in the first bit block and the first encoding rate are both used to determine the target bit quantity value" in the claim comprises the following meaning: the target bit quantity value is equal to the rounded value of the ratio of the number of bits comprised in the first bit block to the first encoding rate.

As an embodiment, the expression "the number of bits comprised in the first bit block and the first encoding rate are both used to determine the target bit quantity value" in the claim comprises the following meaning: the target bit quantity value is equal to the rounded value of the ratio of the sum to the number of bits comprised in the first bit block and the number of CRC bits attached to the first bit block and the first encoding rate.

As an embodiment, the expression "the number of bits comprised in the first bit block and the first encoding rate are used to determine the target bit quantity value" in the claim comprises the following meaning: the ratio of the number of bits comprised in the first bit block to the first encoding rate is used to calculate the target bit quantity value.

As an embodiment, the expression "the number of bits comprised in the first bit block and the first encoding rate are used to determine the target bit quantity value" in the claim comprises the following meaning: the ratio of the sum of the number of bits comprised in the first bit block to the number of CRC bits attached to the first bit block and the first encoding rate is used to calculate the target bit quantity value.

As an embodiment, the expression "the number of bits comprised in the first bit block and the first coding rate are used to determine the target bit quantity value" in the claim comprises the following meaning: the target bit quantity value $E_{\text{UCI}}$ satisfies the following equation:

$$E_{\text{UCI}} = min\left(E_{\text{tot}}, \left\lceil (O^{\text{ACK}} + L)/R_{\text{HP\_UCI}}^{\max}/Q_m \right\rceil \cdot Q_m\right)$$

, $O^{\text{ACK}}$ represents the number of bits comprised in the first bit block, $R_{\text{HP\_UCI}}^{\max}$ represents the first coding rate, $Q_m$ represents the modulation order of the first PUCCH, $E_{\text{tot}}$ represents the total rate matching output sequence length of the first PUCCH or the total number of bits carried by the target resource group, the total number of bits comprised in the first bit sequence, and $L$ represents the number of CRC bits attached to the first bit block (when CRC bits are not attached, L = 0).

As an embodiment, the expression "at least one of the first encoding rate or the second encoding rate is used to determine the number of RBs comprised in the frequency domain of the target resource group" in the claim comprises the following meaning: at least one of the first encoding rate or the second encoding rate is used by the first node in this application to determine the number of RBs comprised in the frequency domain of the target resource group.

As an embodiment, the expression "at least one of the first encoding rate or the second encoding rate is used to determine the number of RBs comprised in the frequency domain of the target resource group" in the claim comprises the following meaning: both the first encoding rate and the second encoding rate are used to determine the number of RBs comprised in the frequency domain of the target resource group.

As an embodiment, the expression "at least one of the first encoding rate or the second encoding rate is used to determine the number of RBs comprised in the frequency domain of the target resource group" in the claim comprises the following meaning: only one of the first encoding rate or the second encoding rate is used to determine the number of RBs comprised in the frequency domain of the target resource group.

As an embodiment, the expression "at least one of the first encoding rate or the second encoding rate is used to determine the number of RBs comprised in the frequency domain of the target resource group" in the claim comprises the following meaning: the first encoding rate or at least one of the second encoding rate is used to determine the number of RBs comprised in the frequency domain of the target resource group.

As an embodiment, the expression "at least one of the first encoding rate or the second encoding rate is used to determine the number of RBs comprised in the frequency domain of the target resource group" in the claim comprises the following meaning: at least one of the first encoding rate or the second encoding rate is used to calculate the number of RBs comprised in the frequency domain of the target resource group.

As an embodiment, the expression "at least one of the first encoding rate or the second encoding rate is used to determine the number of RBs comprised in the target resource group in the frequency domain" in the claim comprises the following meanings: the number of bits comprised in the first bit block and the number of bits associated with the second bit block are used together to determine the first sum value; the first resource quantity value is equal to the number of resource units used to control information bits comprised in the target resource group within an RB; the product of the number of RBs comprised in the target resource group in the frequency domain, the first encoding rate value, the modulation order of the first PUCCH, and the first resource quantity value together are not less than the first sum value. The product of the difference between the number of RBs comprised in the target resource group in the frequency domain minus 1, the first encoding rate value, the modulation order of the first PUCCH, and the first resource quantity value together are all less than the first sum value. As a subsidiary embodiment of the above embodiment, the number of bits associated with the second bit block is used to generate the number of bits comprised in the second bit block. As a subsidiary embodiment of the above embodiment, the number of bits associated with the second bit block is used to generate the number of bits comprised in the HARQ-ACK codebook of the second bit block. As a subsidiary embodiment of the above embodiment, the number of bits associated with the second bit block is the number of bits comprised in the HARQ-ACK codebook used to generate the reference for the second bit block. As a subsidiary embodiment of the above embodiment, the number of bits associated with the second bit block is the number of bits comprised in the HARQ-ACK codebook used to generate the reference for the second bit block. As a subsidiary embodiment of the above embodiment, the number of bits associated with the second bit block is the number of bits comprised in the HARQ-ACK codebook, including padding bits used to generate the second bit block. As a subsidiary embodiment of the above embodiment, the first sum value is equal to the sum of the number of bits comprised in the first bit block, the number of CRC bits attached to the first bit block (if there are CRC bits attached to the first bit block), the number of bits associated with the second bit block, and the number of CRC bits attached to the second bit block (if there are CRC bits attached to the second bit block). As a subsidiary embodiment of the above embodiment, the first sum value is equal to the sum of the number of bits comprised in the first bit block and the number of bits associated with the second bit block.

As an embodiment, the expression "at least one of the first encoding rate or the second encoding rate is used to determine the number of RBs comprised in the target resource group in the frequency domain" in the claim comprises the following meanings: the number of bits comprised in the first bit block, the first encoding rate, the number of bits associated with the second bit block, and the second encoding rate are used together to determine the first sum value; the first resource amount value is equal to the number of resource units used to control information bits comprised in the target resource group within an RB; the product of the number of RBs comprised in the target resource group in the frequency domain, the modulation order of the first PUCCH and the first resource amount value is not less than the first sum value; the product of the difference between the number of RBs comprised in the target resource group in the frequency domain minus 1, the modulation order of the first PUCCH, and the first resource amount value is less than the first sum value. As a subsidiary embodiment of the above embodiment, the number of bits associated with the second bit block is used to generate the number of bits comprised in the second bit block. As a subsidiary embodiment of the above embodiment, the number of bits associated with the second bit block is used to generate the number of bits comprised in the HARQ-ACK codebook of the second bit block. As a subsidiary embodiment of the above embodiment, the number of bits associated with the second bit block is the number of bits comprised in the HARQ-ACK codebook used to generate the reference for the second bit block. As a subsidiary embodiment of the above embodiment, the number of bits associated with the second bit block is the number of bits comprised in the HARQ-ACK codebook used to generate the reference for the second bit block. As a subsidiary embodiment of the above embodiment, the number of bits associated with the second bit block is the number of bits comprised in the HARQ-ACK codebook, including padding bits used to generate the second bit block. As a subsidiary embodiment of the above embodiment, the ratio of the sum of the number of bits comprised in the first bit block and the number of CRC bits attached to the first bit block (if there are CRC bits attached to the first bit block) to the ratio of the first encoding rate is equal to the first ratio. The ratio of the sum of the number of bits comprised in the second bit block and the number of CRC bits attached to the second bit block (if there are CRC bits attached to the second bit block) to the second encoding rate is equal to the second ratio, and the first sum value is equal to the sum of the first ratio and the second ratio. As a subsidiary embodiment of the above embodiment, the first sum value is equal to the sum of the ratio of the number of bits comprised in the first bit block to the first encoding rate, and the ratio of the number of bits associated with the second bit block to the second encoding rate.

**Embodiment 10**

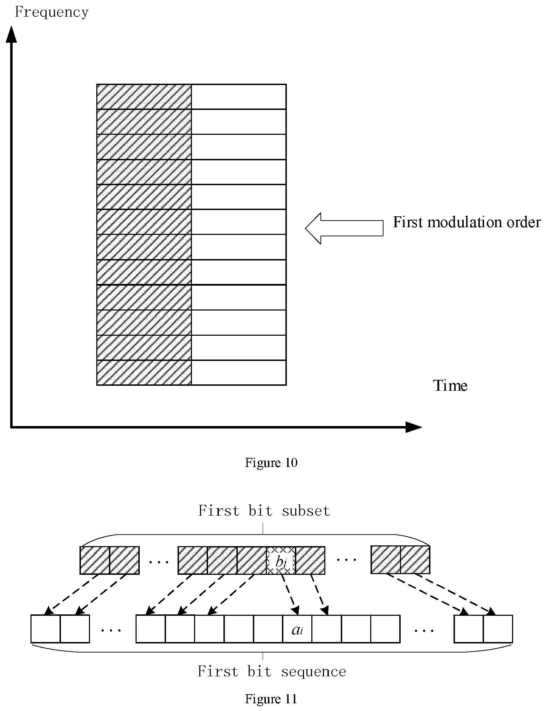

Embodiment 10 illustrates a schematic diagram of a second time domain symbol according to one embodiment of this application, as shown in Figure 10. In Figure 10, the horizontal axis represents time, the vertical axis represents frequency, each rectangular box represents an RE comprised in the target resource group, and the diagonal filled rectangular box represents an RE comprised in the target resource group on the second time domain symbol.

In Embodiment 10, the first modulation order is equal to the modulation order of the first PUCCH in this application, the target resource group in this application comprises a plurality of REs, and the second time domain symbol is a time domain symbol comprised in the target time domain symbol group. The first modulation order and the number of REs comprised in the target resource group on the second time domain symbol are used together to determine the number of bits carried by the target resource group on the second time domain symbol.

As an embodiment, the first modulation order is a positive integer.

As an embodiment, the first modulation order is equal to a non-negative integer power of 2.

As an embodiment, the modulation order of the first PUCCH is equal to 1.

As an embodiment, the modulation order of the first PUCCH is equal to 2.

As an embodiment, the modulation order of the first PUCCH is equal to the modulation order of one of the modulation methods BPSK and QPSK.

As an embodiment, any RE (Resource Element) comprised in the target resource group is an RE corresponding to a subcarrier spacing (SCS).

As an embodiment, the second time domain symbol is any time domain symbol comprised in the target time domain symbol group.

As an embodiment, the second time domain symbol is the earliest time domain symbol comprised in the target time domain symbol group.

As an embodiment, the second time domain symbol is the latest time domain symbol comprised in the target time domain symbol group.

As an embodiment, the second time domain symbol is the same as the first time domain symbol in this application.

As an embodiment, the second time domain symbol is different from the first time domain symbol in this application.

As an embodiment, the expression "the first modulation order and the number of REs comprised in the target resource group on the second time domain symbol are used together to determine the number of bits carried by the target resource group on the second time domain symbol" in the claim comprises the following meaning: the first modulation order and the number of REs comprised in the target resource group on the second time domain symbol are used by the first node or the second node to determine the number of bits carried by the target resource group on the second time domain symbol.

As an embodiment, the expression "the first modulation order and the number of REs comprised in the target resource group on the second time domain symbol are used together to determine the number of bits carried by the target resource group on the second time domain symbol" in the claim comprises the following meaning: the first modulation order and the number of REs comprised in the target resource group on the second time domain symbol are used together to calculate the number of bits carried by the target resource group on the second time domain symbol.

As an embodiment, the expression "the first modulation order and the number of REs comprised in the target resource group on the second time domain symbol are used together to determine the number of bits carried by the target resource group on the second time domain symbol" in the claim comprises the following meaning: the number of bits carried by the target resource group on the second time domain symbol is equal to the product of the first modulation order and the number of REs comprised by the target resource group on the second time domain symbol.

As an embodiment, the expression "the first modulation order and the number of REs comprised in the target resource group on the second time domain symbol are used together to determine the number of bits carried by the target resource group on the second time domain symbol" in the claim comprises the following meaning: the number of bits carried by the target resource group on the second time domain symbol is proportional to the product of the first modulation order and the number of REs comprised by the target resource group on the second time domain symbol.

As an embodiment, the expression "the first modulation order and the number of REs comprised in the target resource group on the second time domain symbol are used together to determine the number of bits carried by the target resource group on the second time domain symbol" in the claim comprises the following meanings: the number of bits carried by the target resource group on the second time domain symbol is linearly correlated with the product of the first modulation order and the number of REs comprised by the target resource group on the second time domain symbol, and the correlation coefficient is predefined or signal configured.

As an embodiment, the expression in the claim "the first modulation order and the number of REs comprised in the target resource group on the second time domain symbol are used together to determine the number of bits carried by the target resource group on the second time domain symbol" comprises the following meaning: the number of bits carried by the target resource group on the second time domain symbol is equal to the product of the first modulation order, the number of REs comprised in the target resource group on the second time domain symbol, and the number of layers of the first PUCCH.

**Embodiment 11**

Embodiment 11 illustrates a schematic diagram of the relationship between the first sequence index value and the second sequence index value according to one embodiment of this application, as shown in Figure 11. In Figure 11, each unfilled rectangular box represents a bit in the first bit sequence, each filled bit represents a bit a plurality ofxed into the first bit sequence in the first bit subset, the hatched rectangular box represents feature bits, $a_i$ represents the first sequential index value, and $b_j$ represents the second sequential index value.

In embodiment 11, the bits comprised in the first bit subset of this application are in sequential order, the feature bit is a bit comprised in the first bit subset, the index value of the feature bit in the first bit sequence is equal to the first sequential index value, and the index value of the feature bit in the first bit subset is equal to the second sequential index value. The first sequential index value and the second sequential index value are positively correlated, while the target interval and the second sequential index value are used together to determine the first sequential index value.

As an embodiment, the bits comprised in the first bit subset are in sequential order starting from 0.

As an embodiment, the bits comprised in the first bit subset are in sequential order in the sequence 0,1,2,....

As an embodiment, the first bit subset is in sequential order according to the encoded output order.

As an embodiment, the first bit subset is in sequential order in the order of encoded output and rate matched output.

As an embodiment, the feature bit is any one of the bits comprised in the first bit subset.

As an embodiment, the feature bit is a given bit comprised in the first bit subset.

As an embodiment, the first sequential index value is a non-negative integer.

As an embodiment, the first sequential index value is a positive integer.

As an embodiment, the second sequential index value is a non-negative integer.

As an embodiment, the second sequential index value is a positive integer.

As an embodiment, the first sequential index value and the second sequential index value are equal.

As an embodiment, the first sequential index value and the second sequential index value are not equal.

As an embodiment, the expression "the first sequential index value and the second sequential index value are positively correlated" in the claim comprises the following meanings: the first sequential index value and the second sequential index value are linearly correlated, and the correlation coefficient of the linear correlation between the first sequential index value and the second sequential index value is greater than 0.

As an embodiment, the expression "the first sequential index value and the second sequential index value are positively correlated" in the claim comprises the following meaning: the first sequential index value increases as the second sequential index value increases.

As an embodiment, the expression "the first sequential index value and the second sequential index value are positively correlated" in the claim comprises the following meaning: the first sequential index value monotonically increases with the second sequential index value.

As an embodiment, the expression "the first sequential index value and the second sequential index value are positively correlated" in the claim comprises the following meaning: the relationship between the first sequential index value and the second sequential index value satisfies the following equation:

$$i_1 = i_2 + i_\Delta + 1$$

, $i_1$ represents the first sequential index value, $i_2$ represents the second sequential index value, and $i_\Delta$ represents the index value in the first bit sequence of the bit with the largest index value in the first bit sequence of a time domain symbol before the time domain symbol occupied by the feature bit in the time domain.

As an embodiment, the expression "the first sequential index value and the second sequential index value are positively correlated" in the claim comprises the following meaning: the relationship between the first sequential index value and the second sequential index value satisfies the following equation:

$$i_1 = i_2 + i_\Delta + 1$$

, $i_1$ represents the first sequential index value, $i_2$ represents the second sequential index value, and $i_\Delta$ represents the index value in the first bit sequence of the bit with the largest index value in the first bit sequence of a time domain symbol before the time domain symbol occupied by the feature bit in the time domain.

As an embodiment, the expression "the target interval and the second sequential index value are used together to determine the first sequential index value" in the claim comprises the following meaning: the target interval and the second sequential index value are used together by the first node or the second node to determine the first sequential index value.

As an embodiment, the expression "the target interval and the second sequential index value are used together to determine the first sequential index value" in the claim comprises the following meaning: the target interval and the second sequential index value are used together to calculate the first sequential index value.

As an embodiment, the expression "the target interval and the second sequential index value are used together to determine the first sequential index value" in the claim comprises the following meaning: when the feature bit is occupied or mapped to a time domain symbol in the target time domain symbol group in the time domain, the relationship between the first sequential index value and the second sequential index value satisfies the following equation:

$$i_1 = \lfloor i_2/Q_m \rfloor \cdot d \cdot Q_m + i_2 + i_\Delta + 1$$

, $i_1$ represents the first sequential index value, $i_2$ represents the second sequential index value, d represents the target interval, $Q_m$ represents the number of layers of the first PUCCH, and $i_\Delta$ represents the modulation order of the first PUCCH. The Formula represents the index value in the first bit sequence of the bit with the largest index value in the first bit sequence of the previous time domain symbol of the time domain symbol occupied by the feature bit in the time domain.

As an embodiment, the expression "the target interval and the second sequential index value are used together to determine the first sequential index value" in the claim comprises the following meaning: when the feature bit occupies or maps to the first time domain symbol in this application in the time domain, the relationship between the first sequential index value and the second sequential index value satisfies the following equation:

$$i_1 = \lfloor i_2/(N_L \cdot Q_m) \rfloor \cdot d \cdot N_L \cdot Q_m + i_2 + i_\Delta + 1$$

, $i_1$ represents the first sequential index value, $i_2$ represents the second sequential index value, d represents the target interval, $N_L$ represents the number of layers of the first PUCCH, $Q_m$ represents the modulation order of the first PUCCH, and $i_\Delta$ represents the index value in the first bit sequence of the bit with the largest index value in the first bit sequence of a time domain symbol of the previous time domain symbol occupied by the feature bit in the time domain.

As an embodiment, the expression "the target interval and the second sequential index value are used together to determine the first sequential index value" in the claim comprises the following meaning: when the complex symbol generated by the feature bit is mapped to the first time domain symbol in the time domain, the relationship between the first sequential index value and the second sequential index value satisfies the following equation:

$$i_1 = \lfloor i_2/Q_m \rfloor \cdot d \cdot Q_m + i_2 + i_\Delta + 1$$

, $i_1$ represents the first sequential index value, $i_2$ represents the second sequential index value, d represents the target interval, $Q_m$ represents the modulation order of the first PUCCH, and $i_\Delta$ represents the index value in the first bit sequence of the bit with the largest index value in the first bit sequence that occupies the previous time domain symbol of the time domain symbol occupied by the feature bit in the time domain.

As an embodiment, the expression "the target interval and the second sequential index value are used together to determine the first sequential index value" in the claim comprises the following meanings: for a given target interval, the first sequential index value and the second sequential index value are linearly correlated, and the correlation coefficient between the first sequential index value and the second sequential index value is equal to 1.

As an embodiment, the first bit sequence is used to generate a first complex symbol sequence, which comprises a plurality of in sequential order complex symbols. The first complex symbol sequence is sequentially mapped to the RE comprised in the target resource group, with frequency mapped first and time domain second. As a subsidiary embodiment of the above embodiment, any one of the complex symbols comprised in the first complex symbol sequence is a modulation symbol. As a subsidiary embodiment of the above embodiment, the first bit sequence is sequentially scrambled and modulated to generate the first complex symbol sequence.

**Embodiment 12**

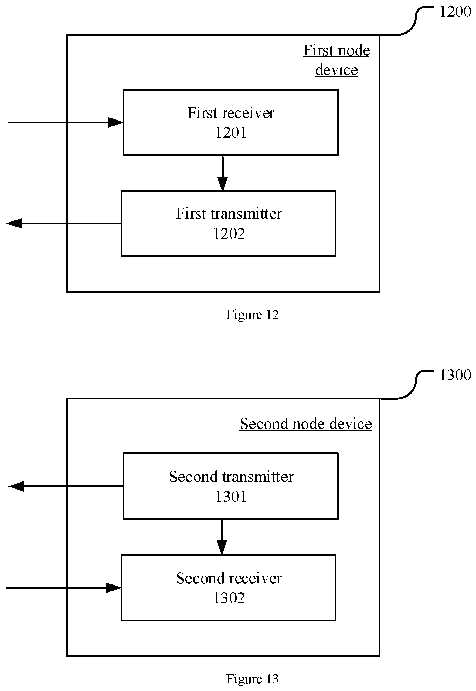

Embodiment 12 illustrates a structural block diagram of a processing device in the first node of one embodiment, as shown in Figure 12. In Figure 12, the processing device 1200 of first node comprises a first receiver 1201 and a first transmitter 1202. As an embodiment, the first receiver 1201 comprises a transmitter/receiver 456 (including antenna 460), a receiving processor 452, and a controller/processor 490 as shown in Figure 4 of this application. The first transmitter 1202 comprises the transmitter/receiver 456 (including antenna 460) in Figure 4 of this application, the transmission processor 455, and the controller/processor 490.

In Embodiment 12, the first receiver 1201 receives the first signal which is used to determine the target resource group. The target resource group occupies the target time domain symbol group in the time domain, and the target time domain symbol group comprises at least one time domain symbol. The first transmitter 1202 sends a first PUCCH in the target resource group, and the first bit sequence is used to generate the first PUCCH. The first bit sequence comprises a plurality of bits in sequential order. Among them, the first bit sequence comprises a first bit subset and a second bit subset, the first bit subset comprises at least one bit after encoding the first bit block, and the second bit subset comprises at least one bit after encoding the second bit block. The priority index value associated with the first bit block is equal to the firstpriority indexvalue, the priority index value associated with the second bit block is equal to the secondpriority indexvalue, and the firstpriority indexvalue and the secondpriority indexvalue are two unequal non-negative integers, respectively. The number of target bits is equal to the number of bits comprised in the first bit subset, and the number of bits carried by the target resource group on at least one time domain symbol comprised in the target time domain symbol group is used together with the number of target bits to determine the target interval which is a positive integer. The target interval is used to determine the distribution of bits comprised in the first bit subset in the first bit sequence.

As an embodiment, the first time domain symbol is a time domain symbol comprised in the target time domain symbol group. The first numerical value is equal to the number of bits carried by the target resource group on the first time domain symbol, the second numerical value is equal to the number of bits carried by the target resource group on the time domain symbol before the first time domain symbol, and the target bit numerical value, the first numerical value, and the second numerical value are used together to determine the target interval.

As an embodiment, the target difference is equal to the difference between the target bit numerical value and the second numerical value, and the target interval is equal to the maximum integer not greater than the first ratio. The ratio of the first numerical value to the target difference is used to determine the first ratio.

As an embodiment, the target sum value is equal to the sum of the first numerical value and the second numerical value, and the target interval is equal to the maximum integer not greater than the second ratio. The ratio of the target sum value to the target bit numerical value is used to determine the second ratio.

As an embodiment, the first receiver 1201 receives the first information block. , the first information block is used to indicate the first encoding rate and the second encoding rate, the number of bits comprised in the first bit block and the first encoding rate are both used to determine the value of the number of target bits, and at least one of the first encoding rate or the second encoding rate is used to determine the number of RBs comprised in the target resource group in the frequency domain.

As an embodiment, the first modulation order is equal to the modulation order of the first PUCCH, the target resource group comprises a plurality of REs, and the second time domain symbol is a time domain symbol comprised in the target time domain symbol group. The first modulation order and the number of REs comprised in the target resource group on the second time domain symbol are used together to determine the number of bits carried by the target resource group on the second time domain symbol.

As an embodiment, the bits comprised in the first bit subset are in sequential order, the feature bit is a bit comprised in the first bit subset, the index value of the feature bit in the first bit sequence is equal to the first sequential index value, and the index value of the feature bit in the first bit subset is equal to the second sequential index value. The first sequential index value and the second sequential index value are positively correlated, and the target interval and the second sequential index value are used together to determine the first sequential index value.

**Embodiment 13**

Embodiment 13 illustrates a structural block diagram of a processing device in the second node of one embodiment, as shown in Figure 13. In Figure 13, the processing device 1300 of the second node comprises a second transmitter 1301 and a second receiver 1302. The second transmitter 1301 comprises a transmitter/receiver 416 (including antenna 460), a transmission processor 415, and a controller/processor 440 in Figure 4 of this application. The second receiver 1302 comprises a transmitter/receiver 416 (including antenna 460) , a receiving processor 412, and a controller/processor 440, as shown in Figure 4 of this application.

In Embodiment 13, the second transmitter 1301 sends a first signal which is used to indicate the target resource group. The target resource group occupies the target time domain symbol group in the time domain, and the target time domain symbol group comprises at least one time domain symbol. The second receiver 1302 receives the first PUCCH in the target resource group. The first bit sequence is used to generate the first PUCCH. The first bit sequence comprises a plurality of bits in sequential order. Among them, the first bit sequence comprises a first bit subset and a second bit subset, the first bit subset comprises at least one bit after encoding the first bit block, and the second bit subset comprises at least one bit after encoding the second bit block. The priority index value associated with the first bit block is equal to the firstpriority indexvalue, the priority index value associated with the second bit block is equal to the secondpriority indexvalue, and the firstpriority indexvalue and the secondpriority indexvalue are two unequal non-negative integers, respectively. The number of target bits is equal to the number of bits comprised in the first bit subset, and the number of bits carried by the target resource group on at least one time domain symbol comprised in the target time domain symbol group is used together with the number of target bits to determine the target interval which is a positive integer. The target interval is used to determine the distribution of bits comprised in the first bit subset in the first bit sequence.

As an embodiment, the first time domain symbol is a time domain symbol comprised in the target time domain symbol group. The first numerical value is equal to the number of bits carried by the target resource group on the first time domain symbol, the second numerical value is equal to the number of bits carried by the target resource group on the time domain symbol before the first time domain symbol, and the target bit numerical value, the first numerical value, and the second numerical value are used together to determine the target interval.

As an embodiment, the target difference is equal to the difference between the target bit numerical value and the second numerical value, and the target interval is equal to the maximum integer not greater than the first ratio. The ratio of the first numerical value to the target difference is used to determine the first ratio.

As an embodiment, the target sum value is equal to the sum of the first numerical value and the second numerical value, and the target interval is equal to the maximum integer not greater than the second ratio. The ratio of the target sum value to the target bit numerical value is used to determine the second ratio.

As an embodiment, the second transmitter 1301 sends the first information block. , the first information block is used to indicate the first encoding rate and the second encoding rate, the number of bits comprised in the first bit block and the first encoding rate are both used to determine the value of the number of target bits, and at least one of the first encoding rate or the second encoding rate is used to determine the number of RBs comprised in the target resource group in the frequency domain.

As an embodiment, the first modulation order is equal to the modulation order of the first PUCCH, the target resource group comprises a plurality of REs, and the second time domain symbol is a time domain symbol comprised in the target time domain symbol group. The first modulation order and the number of REs comprised in the target resource group on the second time domain symbol are used together to determine the number of bits carried by the target resource group on the second time domain symbol.

As an embodiment, the bits comprised in the first bit subset are in sequential order, the feature bit is a bit comprised in the first bit subset, the index value of the feature bit in the first bit sequence is equal to the first sequential index value, and the index value of the feature bit in the first bit subset is equal to the second sequential index value. The first sequential index value and the second sequential index value are positively correlated, and the target interval and the second sequential index value are used together to determine the first sequential index value.

Those skilled in the art can understand that all or part of the steps in the above methods can be completed by instructing the relevant hardware through a program that can be stored in a computer-readable storage medium, such as any read-only memory, hard disk or optical disk. Optionally, all or part of the steps of the above devices can also be implemented by using one or more integrated circuits. Accordingly, each module unit in the above embodiments can be implemented in the form of hardware or in the form of functional software modules. The application is not limited to any specific form of software and hardware combination. The first node, or the second node, or the UE, or the terminal in this application comprises, but is not limited to, mobile phones, tablet computers, laptops, network cards, low-power devices, eMTC devices, NB IoT devices, on-board communication devices, aircraft, drones, radio-controlled aircraft, test equipment, test devices, test instruments and other devices. The base station device, or base station, or network side device in this application comprises, but is not limited to, macro cellular base stations, micro cellular base stations, home base stations, relay base stations, eNB, gNB, transmission and reception node TRPs, relay satellites, satellite base stations, air base stations, testing devices, testing instruments and other devices.

Technicians in this field should understand that the invention can be implemented in other designated forms that are not detached from its core or basic features. Therefore, currently disclosed embodiments should be considered as being descriptive rather than restrictive. The scope of the invention is determined by the accompanying claims rather than the previous description, and all modifications within an equivalent meaning and area are comprised.

**Claims**

1. A first node used for wireless communication, comprising:

a first receiver, configured to:

receive a first signaling, the first signaling is used to determine a target resource group, the target resource group occupies a target time domain symbol group in time domain, and the target time domain symbol group comprises at least one time domain symbol; and
a first transmitter, configured to:

send a first PUCCH in the target resource group, wherein a first bit sequence is used to generate the first PUCCH, and the first bit sequence comprises a plurality of bits in sequential order;
the first bit sequence comprises a first bit subset and a second bit subset, the first bit subset comprises at least one bit of encoding a first bit block, and the second bit subset comprises at least one bit of encoding a second bit block; a priority index value associated with the first bit block is equal to a first priority index value, the priority index value associated with the second bit block is equal to a second priority index value, and the first priority index value and the second priority index value are respectively two unequal non-negative integers; a target bit number is equal to a number of bits comprised in the first bit subset, and a number of bits carried by the target resource group on the at least one time domain symbol comprised in the target time domain symbol group is used together with the target bit number to determine a target interval, the target interval is a positive integer; the target interval is used to determine the distribution of the at least one bit comprised in the first bit subset within the first bit sequence.

2. A first node according to claim 1, a first time domain symbol is one of the at least one time domain symbol comprised in the target time domain symbol group; a first numerical value is equal to a number of bits carried by the target resource group on the first time domain symbol, a second numerical value is equal to a number of bits carried by the target resource group on at least one time domain symbol before the first time domain symbol, and the target bit number, the first numerical value, and the second numerical value are used together to determine the target interval.

3. A first node according to claim 2, a target difference value is equal to the difference value between the target bit number and the second numerical value, the target interval is equal to a maximum integer not greater than a first ratio, and a ratio of the first numerical value to the target difference value is used to determine the first ratio.

4. A first node according to claim 4, a target sum value is equal to the sum of the first numerical value and the second numerical value, the target interval is equal to a maximum integer not greater than a second ratio, and a ratio of the target sum value to the target bit number is used to determine the second ratio.

5. A first node according to any one of claims 1 to 4, comprising:
the first receiver, configured to:
receives a first information block, , the first information block is used to indicate a first coding rate and a second coding rate, both a number of bits comprised in the first bit block and the first coding rate are used to determine the target bit number, and at least one of the first coding rate and the second coding rate is used to determine a number of RBs in frequency domain comprised in the target resource group.

6. A first node according to any one of claims 1 to 5, a first modulation order is equal to a modulation order of the first PUCCH, the target resource group comprises a plurality of resource elements (REs), and a second time domain symbol is one of the at least one time domain symbol comprised in the target time domain symbol group; the first modulation order and a number of REs comprised in the target resource group on the second time domain symbol are used together to determine a number of bits carried by the target resource group on the second time domain symbol.

7. A first node according to any one of claims 1 to 6, the bits comprised in the first bit subset are in sequential order, a characteristics bit is a bit comprised in the first bit subset, a index value of the characteristics bit in the first bit sequence is equal to a first sequential index value, and the index value of the characteristics bit in the first bit subset is equal to a second sequential index value; the first sequential index value and the second sequential index value are positively correlated, and the target interval and the second sequential index value are used together to determine the first sequential index value.

8. A second node for wireless communication, which is comprising:

A second transmitter, which sends a first signal, the first signal is used to indicate a target resource group, which occupies the target time domain symbol group in the time domain, and the target time domain symbol group comprises at least one time domain symbol;

A second receiver, which receives a first PUCCH in the target resource group. The first bit sequence is used to generate the first PUCCH, and the first bit sequence comprises a plurality of bits in sequential order;,

the first bit sequence comprises a first bit subset and a second bit subset. The first bit subset comprises at least one bit after encoding the first bit block, and the second bit subset comprises at least one bit after encoding the second bit block. The priority index value associated with the first bit block is equal to the firstpriority indexvalue. The priority index value associated with the second bit block is equal to the secondpriority indexvalue, and the firstpriority indexvalue and the secondpriority indexvalue are two unequal non-negative integers. The number of target bits is equal to the number of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

9. A method used for the first node of wireless communication, which is **characterized by** including the following steps:

Receiving a first signal, the first signal is used to determine a target resource group, which occupies the target time domain symbol group in the time domain, and the target time domain symbol group comprises at least one time domain symbol;

Sending a first PUCCH in the target resource group. The first bit sequence is used to generate the first PUCCH, and the first bit sequence comprises a plurality of bits in sequential order;,

the first bit sequence comprises a first bit subset and a second bit subset. The first bit subset comprises at least one bit after encoding the first bit block, and the second bit subset comprises at least one bit after encoding the second bit block. The priority index value associated with the first bit block is equal to the firstpriority indexvalue. The priority index value associated with the second bit block is equal to the secondpriority indexvalue, and the firstpriority indexvalue and the secondpriority indexvalue are two unequal non-negative integers. The number of target bits is equal to the number of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

10. a method used for the second node of wireless communication, which is **characterized by** including the following steps:

Sending a first signal, the first signal is used to indicate a target resource group, which occupies the target time domain symbol group in the time domain, and the target time domain symbol group comprises at least one time domain symbol;

Receiving a first PUCCH in the target resource group. The first bit sequence is used to generate the first PUCCH, and the first bit sequence comprises a plurality of bits in sequential order;,

the first bit sequence comprises a first bit subset and a second bit subset. The first bit subset comprises at least one bit after encoding the first bit block, and the second bit subset comprises at least one bit after encoding the second bit block. The priority index value associated with the first bit block is equal to the firstpriority indexvalue. The priority index value associated with the second bit block is equal to the secondpriority indexvalue, and the firstpriority indexvalue and the secondpriority indexvalue are two unequal non-negative integers. The number of target bits is equal to the number of bits comprised in the first bit subset, and the number of bits carried by the target resource group on at least one time domain symbol comprised in the target time domain symbol group is used together with the number of target bits to determine the target interval, which is a positive integer. The target interval is used to determine the distribution of bits comprised in the first bit subset in the first bit sequence.

```
100                    ┌─────────────────────────────────────────┐
  ↘                    │         Receives the first signal        │──101
                       └─────────────────────────────────────────┘
                                          │
                                          ▼
                       ┌─────────────────────────────────────────┐
                       │  Sends the first PUCCH in the target      │──102
                       │  resource pool                            │
                       └─────────────────────────────────────────┘
```

Figure 1

5GS/EPS 200

```
                                                   ┌─────────┐
                                                   │ HSS/UDM │──220
                                                   └─────────┘
                                                        ↕
        ┌─────────────────┐                    ┌──────────┐      ┌──────────────┐
        │  NR-            │                    │ MME/AMF/ │──211 │    Other     │──214
        │  RAN/EUTRAN     │                    │  SMF     │◄────►│ MME/AMF/SMF  │
        │  202            │──203               └──────────┘      └──────────────┘
┌────┐  │  ┌───────────┐  │                         ↕
│ UE │──201│ NR/evolutio│                    ┌──────────┐──212 ┌──────────┐──213    ┌──────────┐
└────┘  │  │ n node B  │  │                  │ S-GW/UPF │◄────►│ P-GW/UPF │◄────────│ Internet │──230
   ↕    │  └───────────┘  │                  └──────────┘      └──────────┘         │ service  │
┌────┐──241 ┌───────────┐──204                      5GC/EPC                         └──────────┘
│ UE │  │   │  Other    │                           210
└────┘  │   │ NR/evolutio│
        │   │ n node B  │
        │   └───────────┘
        └─────────────────┘
```

Figure 2

```
        ◄─Control plane─►                        ◄──User plane──►
              300                                      350
┌────┐  ┌───────────────┐                  ┌────┐  ┌───────────────┐
│ L3 │  │     RRC       │──306              │    │  │     SDAP      │──356
├────┤  └───────────────┘                  │    │  └───────────────┘
│    │         ↕                           │ L2 │         ↕
│    │  ┌───────────────┐                  │    │  ┌───────────────┐
│    │  │     PDCP      │──304             │    │  │     PDCP      │──354
305─│ L2 │  └───────────────┘         355─│    │  └───────────────┘
│    │         ↕                           │    │         ↕
│    │  ┌───────────────┐                  │    │  ┌───────────────┐
│    │  │     RLC       │──303             │    │  │     RLC       │──353
│    │  └───────────────┘                  │    │  └───────────────┘
│    │         ↕                           │    │         ↕
│    │  ┌───────────────┐                  │    │  ┌───────────────┐
│    │  │     MAC       │──302             │    │  │     MAC       │──352
├────┤  └───────────────┘                  ├────┤  └───────────────┘
│    │         ↕                           │    │         ↕
│ L1 │  ┌───────────────┐                  │ L1 │  ┌───────────────┐
│    │  │     PHY       │──301             │    │  │     PHY       │──351
└────┘  └───────────────┘                  └────┘  └───────────────┘
```

Figure 3

**400**

**450**

**420**

**460**

**416**

**456**

**415**

**455**

Transmitting processor

Transmitter

Receiver

Transmitter

Receiver

Transmitting processor

**440**

**490**

**420**

**460**

Controller/ processor

Controller/ processor

Memory

Receiving processor

Transmitter

Receiver

Transmitter

Receiver

Receiving processor

Memory

**430**

**412**

**416**

**456**

**452**

**480**

Figure 4

| N500. second node | | U550. first node |

S501. sends the first information block

First information block

S551. Receives the first information block

S502. Sends the first signal

First signal

S552. Receives the first signal

S553. Sends the first PUCCH in the target resource pool

First PUCCH

S503. .Receives the first PUCCH in the target resource pool

end

end

Figure 5

Figure 6

Figure 7

Figure 8

Figure 9

Frequency

First modulation order

Time

Figure 10

First bit subset

$b_j$

$a_i$

First bit sequence

Figure 11

1200

First node
device

First receiver
1201

First transmitter
1202

Figure 12

1300

Second node device

Second transmitter
1301

Second receiver
1302

Figure 13

| **INTERNATIONAL SEARCH REPORT** | International application No. |
|---|---|
| | **PCT/CN2021/133360** |

| **A.    CLASSIFICATION OF SUBJECT MATTER** |
|---|
| H04W 72/12(2009.01)i |
| According to International Patent Classification (IPC) or to both national classification and IPC |

| **B.    FIELDS SEARCHED** |
|---|
| Minimum documentation searched (classification system followed by classification symbols) |
| H04W; H04L; H04B; H04Q |
| Documentation searched other than minimum documentation to the extent that such documents are included in the fields searched |
| Electronic data base consulted during the international search (name of data base and, where practicable, search terms used) |
| CNABS, CNTXT, CNKI, WOTXT, EPTXT, USTXT, IEEE, 3GPP: 目标, 资源, 组, 符号, 时域, 物理, 上行, 控制, 信道, 比特, 序列, 索引, 子集, 编码, 块, 优先级, 数量, 间隔, PUCCH, target, resource, group, symbol, physical, uplink, control, channel, sequence, index, subset, code, block, priority, number, slot |

| **C.    DOCUMENTS CONSIDERED TO BE RELEVANT** |
|---|

| Category* | Citation of document, with indication, where appropriate, of the relevant passages | Relevant to claim No. |
|---|---|---|
| A | CN 110536464 A (ZTE CORP.) 03 December 2019 (2019-12-03)<br>description, paragraphs [0022]-[0165] | 1-10 |
| A | CN 113194535 A (SHANGHAI LANGBO COMMUNICATION TECHNOLOGY CO., LTD.)<br>30 July 2021 (2021-07-30)<br>entire document | 1-10 |
| A | CN 111277376 A (VIVO COMMUNICATION TECHNOLOGY CO., LTD.) 12 June 2020<br>(2020-06-12)<br>entire document | 1-10 |
| A | US 2020127788 A1 (WU LU et al.) 23 April 2020 (2020-04-23)<br>entire document | 1-10 |
| A | US 2021051727 A1 (QUALCOMM INC.) 18 February 2021 (2021-02-18)<br>entire document | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 March 2022** | **22 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
Information on patent family members

</div>

| International application No. |
| --- |
| **PCT/CN2021/133360** |

| Patent document cited in search report | | | Publication date (day/month/year) | Patent family member(s) | | | Publication date (day/month/year) |
| --- | --- | --- | --- | --- | --- | --- | --- |
| CN | 110536464 | A | 03 December 2019 | WO | 2021027604 | A1 | 18 February 2021 |
| CN | 113194535 | A | 30 July 2021 | | None | | |
| CN | 111277376 | A | 12 June 2020 | | None | | |
| US | 2020127788 | A1 | 23 April 2020 | US | 11108524 | B2 | 31 August 2021 |
| | | | | CN | 111083782 | A | 28 April 2020 |
| US | 2021051727 | A1 | 18 February 2021 | WO | 2021034556 | A1 | 25 February 2021 |
| | | | | TW | 202114456 | A | 01 April 2021 |

Form PCT/ISA/210 (patent family annex) (January 2015)

**EP 4 404 668 A1**

**Patent documents cited in the description**

- CN 202111066434